(19)

**Europäisches Patentamt**
**European Patent Office**
**Office européen des brevets**

(11) **EP 2 270 733 A1**

(12) **EUROPEAN PATENT APPLICATION**

(43) Date of publication:
**05.01.2011 Bulletin 2011/01**

(51) Int Cl.:
***G06Q 30/00*** *(2006.01)*

(21) Application number: **10161083.0**

(22) Date of filing: **26.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **23.06.2009 JP 2009148195**

(71) Applicant: **Hitachi Ltd.**
**Tokyo (JP)**

(72) Inventors:
• **Tanaka, Masataka**
**Chiyoda-ku, Tokyo 100-8220 (JP)**
• **Hiroshige, Yuzo**
**Chiyoda-ku, Tokyo 100-8220 (JP)**
• **Hamatsuka, Yasuhiro**
**Chiyoda-ku, Tokyo 100-8220 (JP)**

(74) Representative: **Kirschner, Klaus Dieter et al**
**Puschmann Borchert Bardehle**
**Patentanwälte Partnerschaft**
**Bajuwarenring 21**
**D-82041 Oberhaching (DE)**

(54) **Supplier evaluation method in electronic commerce and system thereof**

(57) A method comprises the steps of: from member information of a trading partner as an object to be evaluated and order information (121) on product items, estimating a supply chain associated with the member information and the item information; narrowing or screening the estimated supply chain by using attribute information (122) associated with the item information; evaluating the response periods of individual members from the information request date and the information delivery date in the environment information exchange history (123) of individual members in the narrowed supply chain; totaling the evaluated response periods of individual members according to the narrowed supply chain; and answering a user request by sending the totaled response period of the company being evaluated to a user computer.

FIG. 2

[FLOW OF GOODS AND INFORMATION IN SC (SUPPLY CHAIN)]

EP 2 270 733 A1

**Description**

This invention relates to a system for managing information on trading conducted by a plurality of companies via communication networks and more particularly to a supplier evaluation method and system by which a company can observe regulations that make mandatory the submission or transfer of information on specified chemical substances contained in a product.

Many countries in recent years have been reinforcing environmental regulations, one example of which is the REACH (Registration Evaluation Authorization and Restriction of Chemicals) regulation enforced in Europe. The REACH is a regulation that makes mandatory the publication of information on specified chemical substances contained in products. To meet this regulation, individual companies need to exchange among themselves without delays information on chemical substances contained in the products over an entire supply chain (hereinafter referred to as SC) in order to take necessary steps to deal with a supplier who is found highly likely to violate regulations, such as failing to exclude prohibited substances from their products or delaying submission of requested information.

As a system to ensure a smooth exchange of information among enterprises, there has been electronic commerce. Some of such conventional methods are described in JP-A-2000-148785 and JP-A-2003-303252.

The method described in JP-A-2000-148785 identifies companies involved in the SC of a particular product and manages all trading information exchanged among the companies in a unified manner, so as to enable the companies to refer to the information according to their authorities assigned to the individual companies in advance. With this method, even when a problem occurs among secondary suppliers who have no direct business relationship with one another, they can access the information of interest to take necessary measures quickly.

The method described in JP-A-2003-303252 evaluates a level of match between quality conditions of suppliers' own processes submitted by the suppliers and a quality condition requested by a buyer and then shows suppliers who meet the quality condition of the buyer.

SUMMARY OF THE INVENTION

Generally, an SC leading to a final product involves many companies of various industries in multiple stages, so that a problem in information exchange in an upstream part of the SC may propagate downstream along the SC resulting in a violation of the regulation. So, managing the risk of a supplier violating the regulation needs to take into account also the risk that companies upstream of the supplier of interest in the SC may violate the regulation.

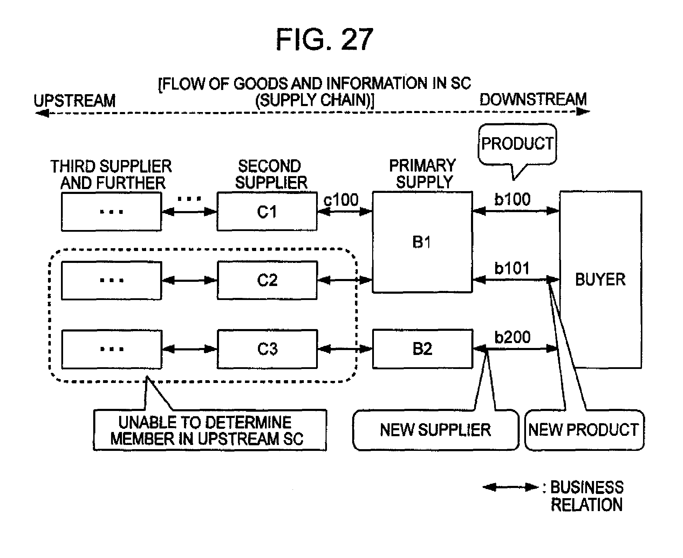

As to the method described in JP-A-2000-148785, it first identifies companies involved in the SC for a particular product in advance before it can extract a problem in the upstream SC from the trading information among these companies. It, however, does not consider dealing with a situation where companies involved in SC for a particular product cannot be identified. For example, in an SC shown in Fig. 27, a trading of a product b100 between company A1 and company B1 has already been completed. This means that the associated companies in the SC from second suppliers on upstream can be located, whereas when company A1 initiates a business deal with company B1 for a new product b101 or when company A1 begins a business deal with a new supplier B2, companies in the upstream SC cannot be identified.

As to the method described in JP-A-2003-303252, although it considers the evaluation of a supplier that makes a direct deal, it does not take into account the effect of the evaluation result on companies upstream of the supplier of interest.

It is therefore an object of this invention to provide a system for managing information on trading conducted by a plurality of companies via communication networks and more particularly to provide a supplier evaluation method and system in electronic commerce that enables an SC to observe a regulation, which makes the submission or transfer of information on specified chemical substances in a product mandatory, by additionally considering a risk of companies in an upstream part of the SC violating the regulation.

To achieve the above objective, the present invention proposes a supplier evaluation method in electronic commerce, which comprises the steps of: accepting at any time, via a network from terminals of members engaged in commercial transactions, order information representing a history of orders for products traded among the members and environment information exchange history information representing a history of exchange of the environment information among the members, and then registering these information with a storage unit; storing product attribute information in a storage unit in advance, in addition to the order information and the environment information exchange history information, the product attribute information being supplementary information on products traded among the members; accepting an input from a user of information to be evaluated, or evaluation information, that has at least a member ID of a trading partner and an item ID; estimating a supply chain by searching the order information using the member ID of the evaluation information; narrowing the estimated supply chain information by searching the product attribute information using the member ID and item ID of the evaluation information; preparing member-based evaluation result information by searching the environment information exchange history information using the member ID and item ID of the screened supply chain information, the member-based evaluation result information representing a result of evaluating response periods taken by individual members to deliver requested information; performing a tally operation to replace a maximum response period of a downstream member in the supply chain with a maximum response period of an upstream member in the supply chain, by searching the member-based evaluation result information for those records having the same combinations of member ID and item ID; and outputting from the supply chain total result information to a user terminal through the input/output unit and the network an evaluation value on the response period of the member being evaluated.

Furthermore, the present invention proposes a supplier evaluation system in electronic commerce, which comprises: an input/output unit to accept at any time, via a network from terminals of members engaged in commercial transactions, order information representing a history of orders for products traded among the members and environment information exchange history information representing a history of exchange of the environment information among the members, and then to register these information with a storage unit; the storage unit to store the order information, the environment information exchange history information and product attribute information, the product attribute information being supplementary information on products traded among the members; the input/output unit to accept an input from a user of information to be evaluated, or evaluation information, that has at least a member ID of a trading partner and an item ID; and a processing unit to estimate a supply chain by searching the order information using the member ID of the evaluation information, to narrow the estimated supply chain information by searching the product attribute information using the member ID and item ID of the evaluation information, to prepare member-based evaluation result information by searching the environment information exchange history information using the member ID and item ID of the screened supply chain information, the member-based evaluation result information representing a result of evaluating response periods taken by individual members to deliver requested information, to perform a tally operation to replace a maximum response period of a downstream member in the supply chain with a maximum response period of an upstream member in the supply chain, by searching the member-based evaluation result information for those records having the same combinations of member ID and item ID, and to output from the supply chain total result information to a user terminal through the input/output unit an evaluation value on the response period of the member being evaluated.

Since this invention allows the user to evaluate the risk of each supplier violating the regulation by additionally considering the effect of companies in the upstream SC, it is possible to take proactive measures against problems, such as possible delays in submitting requested information on particular chemical substances in the product in an SC of a business deal involving many companies of various industries in multiple stages.

Other objects, features and advantages of the invention will become apparent from the following description of the embodiments of the invention taken in conjunction with the accompanying drawings.

Now, methods to implement the present invention will be explained by referring to the accompanying drawings.

Fig. 1 shows an example of process flow in one embodiment of this invention.

Fig. 2 is a block diagram showing an overall system configuration of this invention.

Fig. 3 shows an example of supply chain estimation process flow in the embodiment of this invention.

Fig. 4 shows an example of supply chain screening process flow using information of a product constituent procured item in the embodiment of this invention.

Fig. 5 shows an example of supply chain screening process flow using information of a product manufacturer type number in the embodiment of this invention.

Fig. 6 shows an example of supply chain screening process flow using information of a product classification in the embodiment of this invention.

Fig. 7 shows an example of supply chain screening process flow using information of a product use in the embodiment of this invention.

Fig. 8 shows an example process flow of evaluating response periods of individual members in the embodiment of this invention.

Fig. 9 shows an example process flow of totaling evaluation results of response periods of individual members in the embodiment of this invention.

Fig. 10 shows an example of order information.

Fig. 11 shows an example of product attribute information representing information of a product constituent procured item.

Fig. 12 shows an example of product attribute information representing information of a product manufacturer type number.

Fig. 13 shows an example of product attribute information representing information of a product classification.

Fig. 14 shows an example of product attribute information representing information of a product use.

Fig. 15 shows an example of environment information exchange history.

Fig. 16 shows an example of evaluation result information in the embodiment of this invention.

Fig. 17 shows an example of estimated supply chain information in the embodiment of this invention.

Fig. 18 shows an example of screened supply chain information using information of a product constituent procured item in the embodiment of this invention.

Fig. 19 shows an example of screened supply chain information using information of a product manufacturer type number in the embodiment of this invention.

Fig. 20 shows an example of screened supply chain information using information of a product classification in the embodiment of this invention.

Fig. 21 shows an example of screened supply chain information using information of a product use in the embodiment of this invention.

Fig. 22 shows an example of screened supply chain information using information of a product constituent procured item, a product manufacturer type number, a product classification and a product use in the embodiment of this invention.

Fig. 23 shows an example of member-based evaluation result information in the embodiment of this invention.

Fig. 24 shows an example of supply chain total result information before the member-based evaluation results are totaled over the supply chain in the embodiment of this invention.

Fig. 25 shows an example of supply chain total result information after the member-based evaluation results are totaled over the supply chain in the embodiment of this invention.

Fig. 26 shows an example of input/output display screen in the embodiment of this invention.

Fig. 27 shows an example of problem in a conventional art.

Fig. 28 shows an example process flow of totaling evaluation results of response periods of individual members in a second embodiment of this invention.

Fig. 29 shows an example of supply chain total result information before the member-based evaluation results are totaled over the supply chain in the second embodiment of this invention.

Fig. 30 shows an example of supply chain total result information after the member-based evaluation results are totaled over the supply chain in the second embodiment of this invention.

Fig. 31 shows an example of input/output display screen in the second embodiment of this invention.

Fig. 32 shows an example process flow of displaying response periods in the upstream supply chain of the second embodiment of this invention.

Fig. 33 shows an example process flow in a third embodiment of this invention.

Fig. 34 is a block diagram showing an overall system configuration in the third embodiment of this invention.

Fig. 35 shows an example of supply chain screening process flow in the third embodiment of this invention.

Fig. 36 shows an example of environment information exchange history in the third embodiment of this invention.

Fig. 37 shows an example of information exchange definition by industry in the third embodiment of this invention.

Fig. 38 shows an example of information exchange definition among industries in the third embodiment of this invention.

Fig. 39 shows an example of environment information input/output quantity for individual members in the third embodiment of this invention.

Fig. 40 shows an example result of assigning industry to individual members in the third embodiment of this invention.

[Embodiment 1]

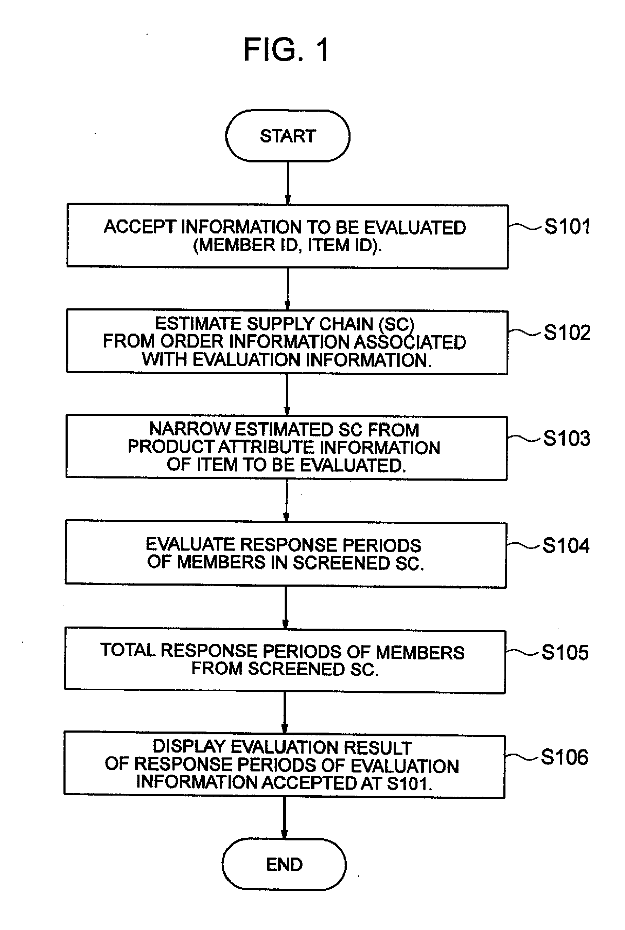

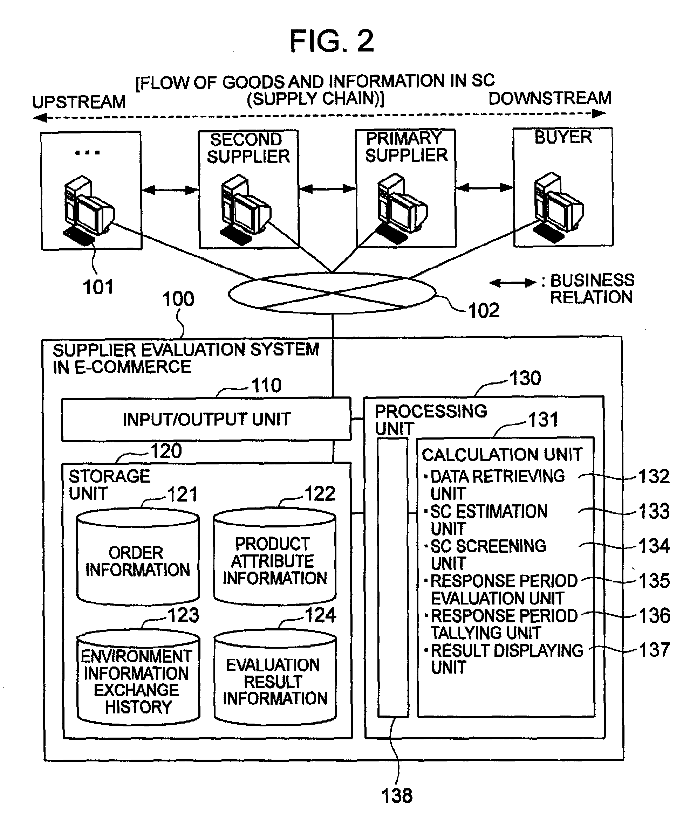

Fig. 1 shows an example flow of process in this embodiment and Fig. 2 is a functional block diagram showing a system configuration of this embodiment.

In Fig. 2, a supplier evaluation system 100 in electronic commerce comprises a personal computer (PC), such as a server and a terminal owned by an electronic commerce provider, and a system installed in that PC. The supplier evaluation system 100 has an input/output unit 110, a storage unit 120 and a processing unit 130. Terminals 101 are PCs owned by individual companies and connected through a network 102 to the supplier evaluation system 100 in the electronic commerce. These terminals 101 include, for example, an input device such as keyboard and mouse, a communication device for communication with the outside, a read/write device for disk type storage media, and an output device such as CRT and liquid crystal monitor.

The input/output unit 110 retrieves data from the terminals 101 required by processing in the processing unit 130 and displays results calculated by the processing unit 130 on the terminals 101.

The storage unit 120 is constructed of a hard disk drive or memory and stores order information 121, product attribute information 122 and environment information exchange history 123, all these constituting input data to the processing unit 130, and also evaluation result information 124 which constitutes output data from the processing unit 130.

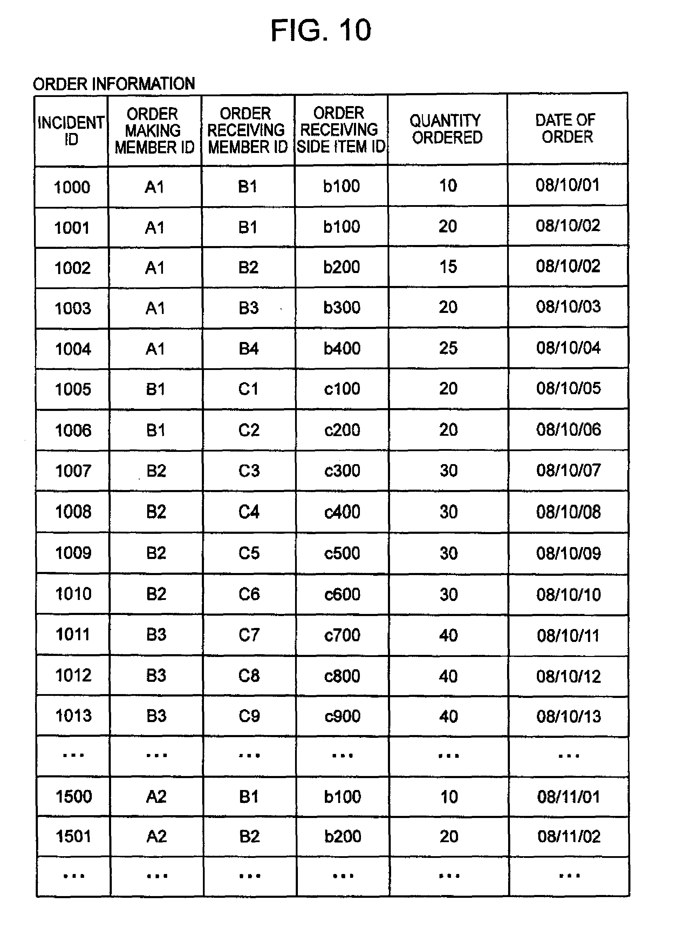

The order information 121 is a history of orders for products traded among companies and, as shown in Fig. 10 for example, comprises an item ID, an order making member ID, an order receiving member ID, a order receiving side product ID, a product quantity and a day of order. The member ID (order making member ID or order receiving member ID) in Fig. 10 is data used to identify a company or a department or factory of that company. In the order information 121, an item ID "1000" shows that a member ID "A1" placed an order for "10" (product quantity) of product ID "b100" with a member ID "B1" on the day of "08/10/01".

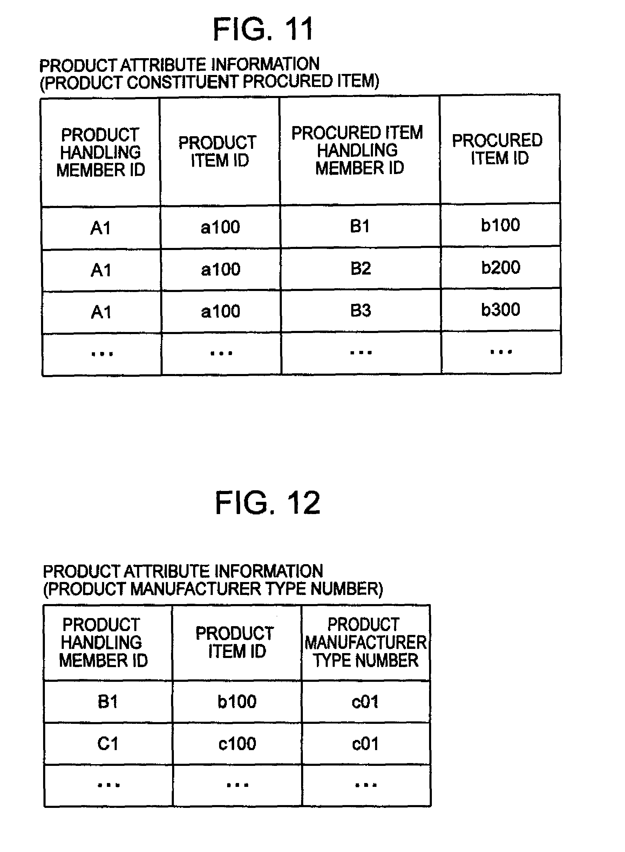

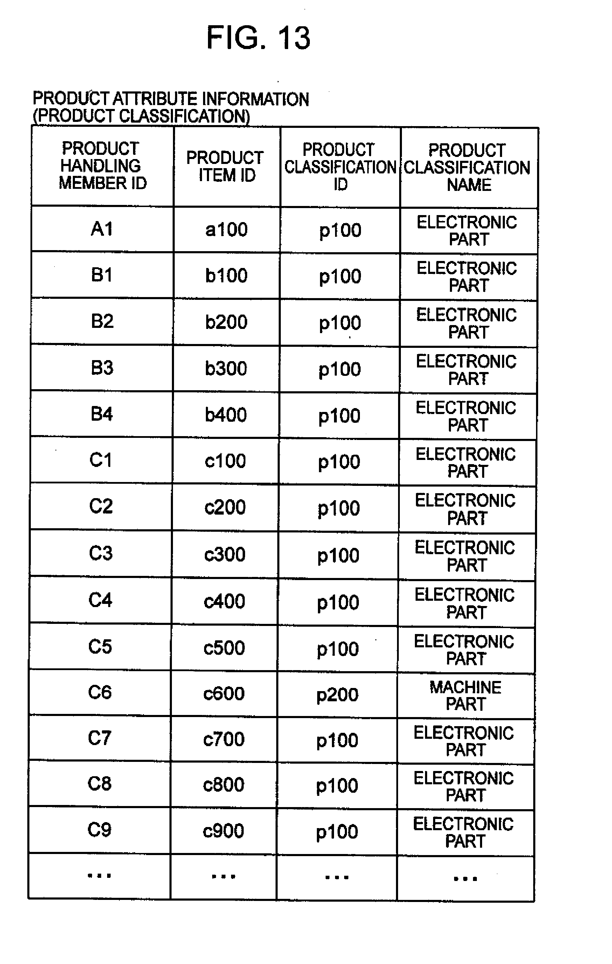

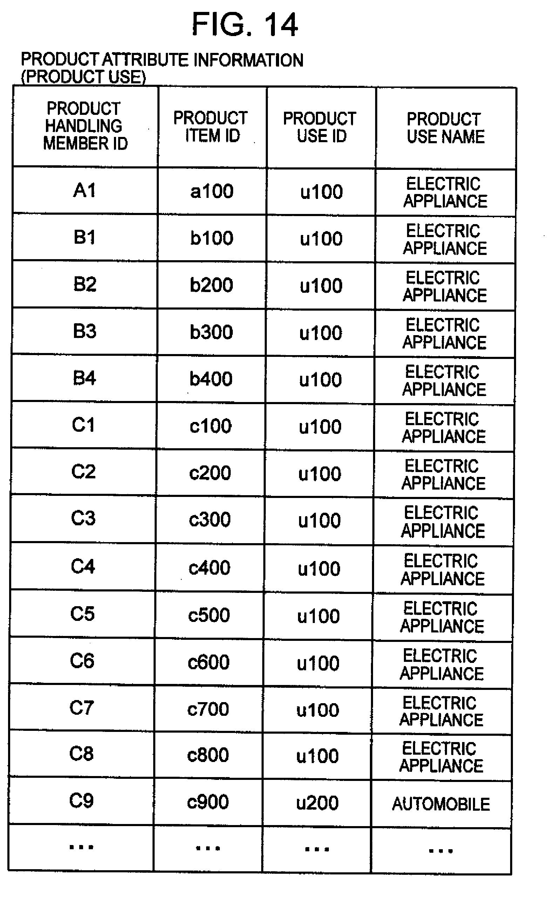

The product attribute information 122 is supplementary information on products traded among companies. For example, it includes information of a product constituent procured item shown in Fig. 11, a product manufacturer type number shown in Fig. 12, a product classification shown in Fig. 13, and a product use shown in Fig. 14. The information in the product constituent procured item of Fig. 11 indicates which procured items a product handled by individual companies is made of. It comprises, for example, a product handling member ID, a product item ID, a procured item handling member ID and a procured item ID. The information of the product constituent procured item of Fig. 11 shows that a product item ID "a100" handled by a member ID "A1" is made of procured item IDs "b100", "b200" and "b300" handled by member IDs "B1", "B2" and "B3" respectively. The information of the product manufacturer type number of Fig. 12 shows information representing manufacturers' product codes of products handled by individual companies. It comprises, for example, a product handling member ID, a product item ID and a product manufacturer type number. The information of the product manufacturer type number of Fig. 12 shows that product item IDs "b100" and "c100" handled by product handling member IDs "B1" and "C1" are products both having the same product manufacturer type number "c01 ". The information of the product classification of Fig. 13 shows information representing a classification of a product handled by individual companies. It comprises, for example, a product handling member ID, a product item ID, a product classification ID and a product classification name. Here, as the product classification ID and product classification name in the information of the product classification, ECALS (registered trademark of Japan Electronics and Information Technology Industries Association), a coded system of classification of electronic parts, may be used. The information of the product classification of Fig. 13 shows that a product item ID "a100" handled by a member ID "A1" belongs to a product classification "electronic parts". The information of the product use of Fig. 14 shows information representing the use of a product handled by individual companies. It comprises, for example, a product handling member ID, a product item ID, a product use ID and a product use name. Here, as the product use ID and product use name in the information of the product use, a use classification defined by JGPPSSI (Japan Green Procurement Survey Standardization Initiative) and use information identified at time of registration according to the REACH rule may be used. The information of the product use of Fig. 14 shows that a product item ID "a100" handled by a member ID "A1" has a product use of "electrical appliances" with a product use ID "u100".

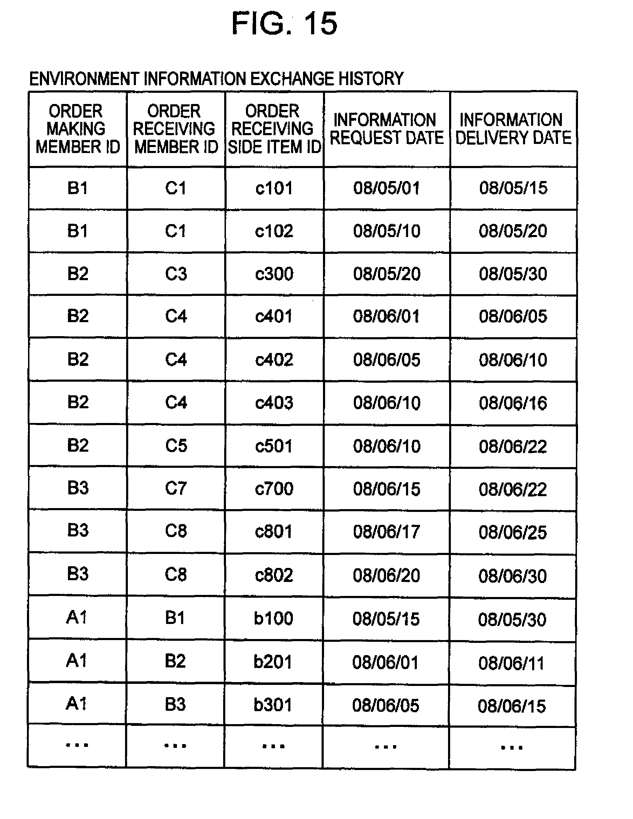

The environment information exchange history 123 is information used to manage a history of environment information exchanged among companies. It comprises, for example, information of an order making member ID, an order receiving member ID, an order receiving side item ID, an information request date and an information delivered date, as shown in Fig. 15. The environment information exchange history 123 of Fig. 15 indicates, for example, that, as for a product with item ID "c101" that a member ID "B1" had ordered from a member ID "C1", the member B1 requested environment information from the member C1 on "08/05/01" and that the member C1 answered the request by delivering the environment information to the member B1 on "08/05/15".

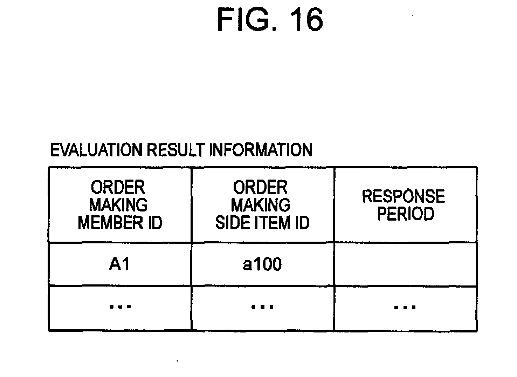

The evaluation result information 124 is information representing results of evaluation on the response periods taken by individual suppliers in the whole SC. It comprises, for example, information of an order making member ID, an order making side item ID and a response period, as shown in Fig. 16. The evaluation result information 124 of Fig. 16 indicates that, as for a product item ID "a100" that a member ID "A1" is supposed to manufacture, environment information is expected to be delivered in "12 days".

The processing unit 130 retrieves data necessary for computation from the input/output unit 110 and the storage unit 120 and outputs results of processing to the storage unit 120. It comprises a calculation unit 131 which executes arithmetic operations, and a memory unit 138 as a work area of the arithmetic operations in the calculation unit 131.

The calculation unit 131 comprises a data retrieving unit 132 to retrieve data necessary for computation from the input/output unit 110 and the storage unit 120; an SC estimation unit 133 to estimate an SC associated with evaluation information, by using the evaluation information that the data retrieving unit 132 has retrieved from the input/output unit 110 and the order information 121; an SC screening unit 134 to narrow down the SC estimated by the SC estimation unit 133, by using the product attribute information 122 that the data retrieving unit 132 has retrieved; a response period evaluation unit 135 to evaluate the response period taken by individual members in the SC narrowed down by the SC screening unit 134 based on the environment information exchange history 123 retrieved by the data retrieving unit 132; a response period tallying unit 136 to total the response periods evaluated by the response period evaluation unit 135, according to the SC narrowed down by the SC screening unit 134; and a result displaying unit 137 to display the evaluation result information 124 on the user terminals 101 through the input/output unit 110 and the network 102.

The memory unit 138 temporarily holds data that the data retrieving unit 132 has retrieved from the input/output unit 110 and the storage unit 120 or the result produced by the calculation unit 131.

Next, operations of individual functions of the supplier evaluation system 100 in the electronic commerce of Fig. 2 will be explained according to the process flow shown in Fig. 1.

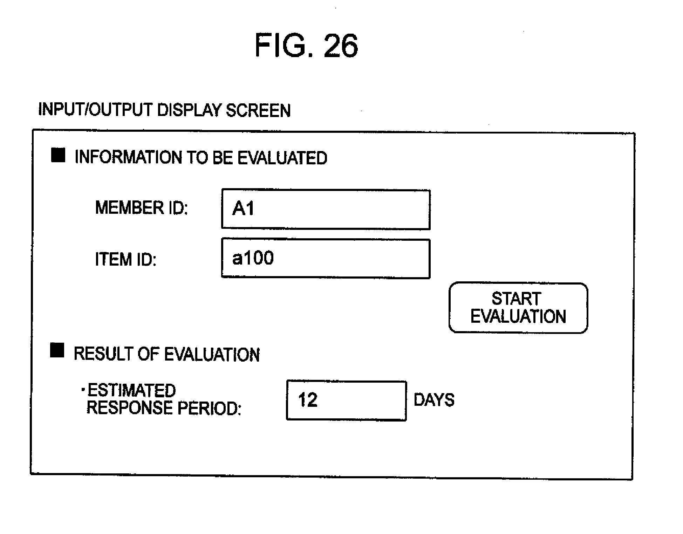

First, the input/output unit 110 accepts through the network 102 evaluation information (member name and item name to be evaluated) that the user has entered from his terminal 101. The data retrieving unit 132 writes the evaluation information into the memory unit 138 (S101). The user, for example, enters a member name and an item name to be evaluated on an input/output display, such as shown in Fig. 26, and clicks on an evaluation start button to initiate the processing of the supplier evaluation system 100 in the electronic commerce. In this embodiment, an example case where the member ID and item ID to be evaluated are "A1" and "a100" respectively, as shown in Fig. 26, will be explained as follows.

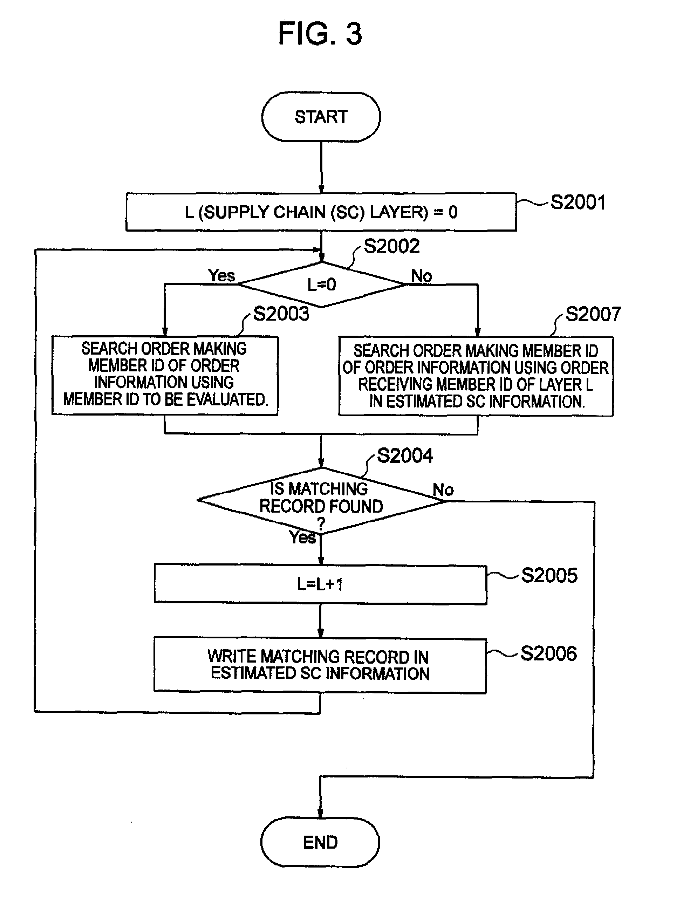

Then, the data retrieving unit 132 searches through the order information 121 using the evaluation information and the SC estimation unit 133 estimates an SC associated with the evaluation information (S102). Here, the method of estimating the SC is explained by referring to the flow chart of Fig. 3.

First, the SC estimation unit 133 sets 0 in a constant L representing a layer of SC (S2001) and then checks whether L is 0 (S2002). Because the initial setting is L=0, the result of decision of S2002 is "yes".

Next, the data retrieving unit 132 searches through the order making member ID of the order information 121 by using the member ID of the evaluation information (S2003) to see if there is matching data (S2004). For example, if the order making member ID of the order information 121 of Fig. 10 is searched for the order making member ID "A1", the search hits five pieces of data with item IDs "1000" to "1004".

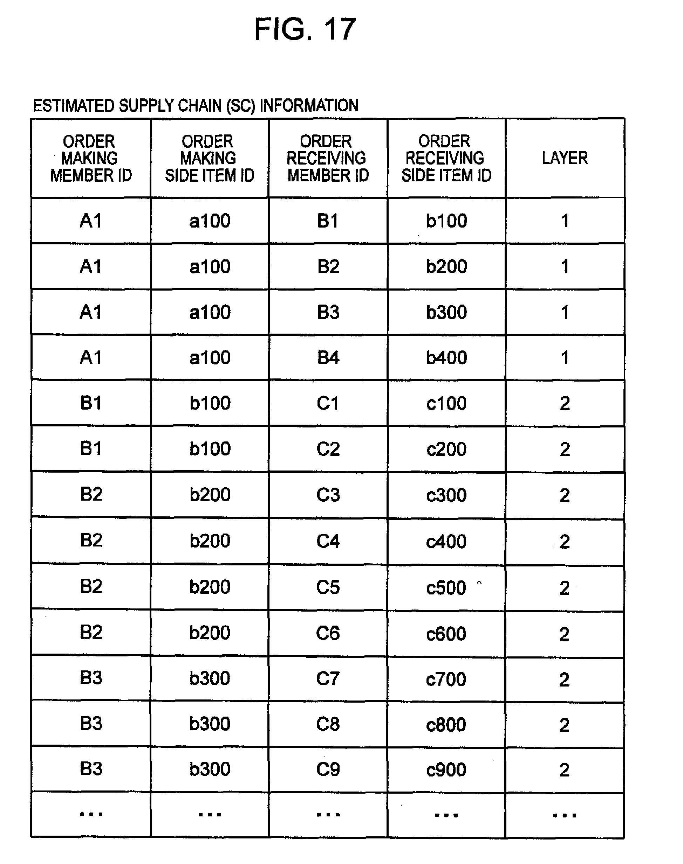

If S2004 has found matching data, the SC estimation unit 133 adds 1 to L (S2005) and then writes the member ID of the estimated SC information of Fig. 17, which was used in the search at S2003 (or S2007), and item ID which was not used in the search but is to be evaluated or item ID corresponding to the member ID into the order making member ID and the order making side item ID, respectively. The SC estimation unit 133 further writes into the estimated SC information of Fig. 17 the order receiving member ID and the order receiving side item ID of the order information 121 and also writes L into the layer before storing them in the memory unit 138. Here, since the search of S2003 was conducted, the order making member ID and the order making side item ID of the estimated SC information are assigned the member ID "A1" and the item ID "a100", respectively, which are both evaluation information. As to the data searched by S2003 (or S2007), if there are two or more records in the estimated SC information, only one record is stored. For example, in the order information 121 of Fig. 10, there are two records of data with the order making member ID, order receiving member ID and item ID being "A1", "B1" and "b100" respectively. In the estimated SC information of Fig. 17, only one record of such data is shown.

Then, the process returns to S2002. If L is not 0, the data retrieving unit 132 searches through the order making member ID of the order information 121 using the order receiving member ID at layer L in the stored estimated SC information (S2007) to see if there are records of the matching data (S2004). Here, the search through the order information 121 of Fig. 10 for the order making member IDs that have the order receiving member IDs "B1", "B2", "B3" and "B4" at layer L (=1) in the estimated SC information of Fig. 17 hits nine records of the matching data.

Then, if S2004 finds matching data, the SC estimation unit 133 executes the processing S2005 and S2006. Here, since the search of S2007 was conducted, a fifth record in the estimated SC information of Fig. 17 with the order receiving member ID "C1" and the order receiving side item ID "c100", for example, has its order making member ID and order making side item ID written with the order receiving member ID "B1" and order receiving side item ID "b100" of a first record, both used for the data search. L (=2) is stored in the layer.

Finally, if as a result of search by S2003 (or S2007) no matching data is found, the processing is terminated (S2004). In this example, the search through the order information 121 of Fig. 10 for the order making member IDs that are order receiving member IDs in the estimated SC information of Fig. 17 with a layer L (=2) hits no matching data. So, the processing is ended. The following explanation refers to the estimated SC information shown in Fig. 17.

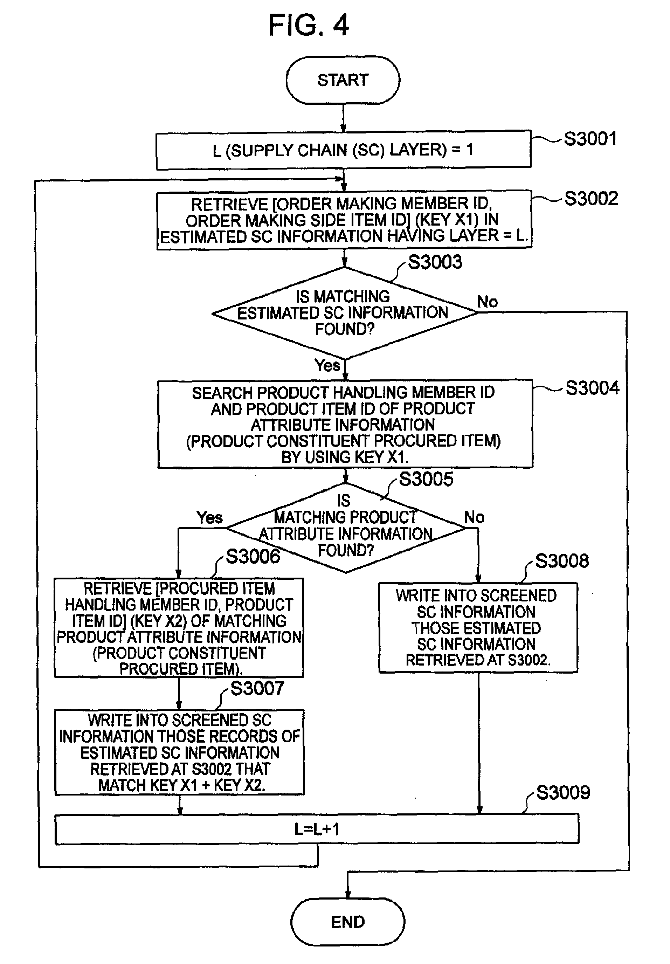

Next, in the process flow shown in Fig. 1, the SC screening unit 134 narrows the estimated SC information of S102, using the product attribute information 122 associated with the item to be evaluated (S103). Here, as the product attribute information 122 used to narrow the estimated SC information, there are pieces of information, for example, a product constituent procured item, a product manufacturer type number, a product classification and a product use shown in Fig. 11 to Fig. 14, respectively. The method of screening the estimated SC information using these pieces of information will be explained by referring to the process flows shown in Fig. 4 to Fig. 7.

First, the method of screening the estimated SC information using the product attribute information 122 (the information of the product constituent procured item) of Fig. 11 will be explained by referring to the process flow of Fig. 4.

As a first step, the SC screening unit 134 sets 1 in a constant L representing the layer of SC (S3001). The data retrieving unit 132 retrieves a combination of order making member ID and order making side item ID in the estimated SC information, both having a layer of L (S3002), and checks if there is any matching data (S3003), In the following explanation the retrieved combination of order making member ID and order making side item ID is taken as a key X1 [order making member ID, order making side item ID]. In the estimated SC information of Fig. 17, there are four records of data with the layer of L (=1). They have a key X1 [A1, a100].

Next, if any matching data in the estimated SC information is found by S3003, the data retrieving unit 132 searches through the product handling member ID and the product item ID in the product attribute information 122 (the information of the product constituent procured item) using the key X1 (S3004) to see if there is any matching data (S3005). For the key X1 [A1, a100], there are three records of matching data in the product attribute information 122 of Fig,11.

Then, if there is any product attribute information 122, the data retrieving unit 132 retrieves a combination of procured item handling member ID and procured item ID of the product attribute information 122 (S3006). Here, the retrieved combination of procured item handling member ID and procured item ID is taken as a key X2 [procured item handling member ID, procured item ID]. In the product attribute information 122 of Fig. 11, the three matching records have X2 keys of [B1, b100], [B2, b200] and [B3, b300], respectively.

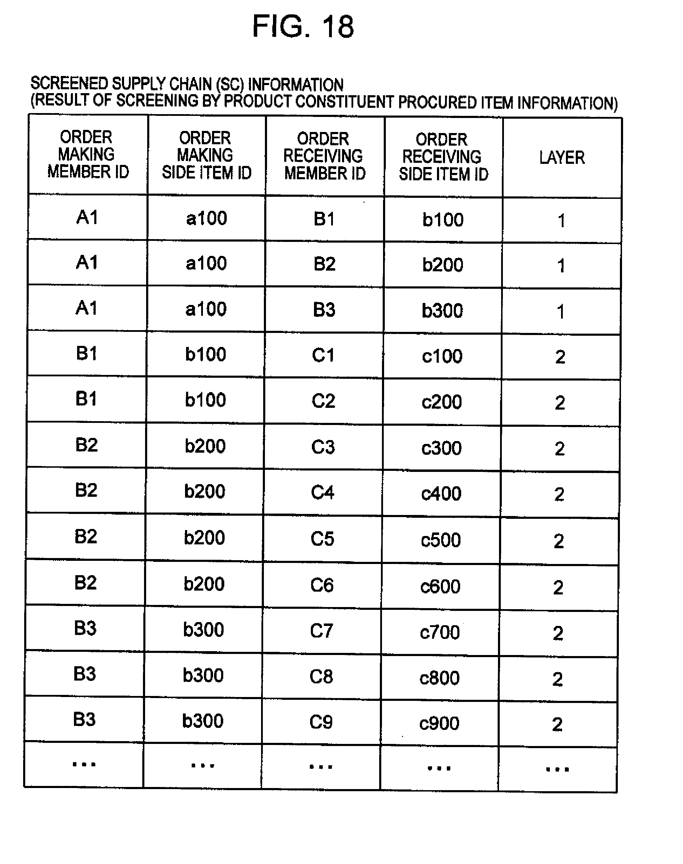

Then, of the estimated SC retrieved by S3002, those records whose order making member ID and order making side item ID match the key X1 and whose order receiving member ID and order receiving side item ID match the key X2 are written into the screened SC information by the SC screening unit 134 for storage in the memory unit 138 (S3007). In the estimated SC information of Fig. 17, of the four records obtained at S3002 which have key X1 [A1, a100], only those obtained at S3006 which have X2 keys of [B1, b100], [B2, b200] and [B3, b300] are written into the screened SC information as shown in Fig. 18.

Next, the SC screening unit 134 adds 1 to L (S3009) and returns to the steps S3002 and S3003 in the data retrieving unit 132. In the estimated SC information of Fig. 17, there are nine records with the layer L (=2) and they have three different keys X1 [B1, b100], [B2, b200] and [B3, b300].

Then the data retrieving unit 132 executes S3004 and S3005. Here there are three different keys X1 as shown above and, in the product attribute information 122 of Fig. 11, there are no matching records.

If S3005 finds no matching product attribute information 122, the estimated SC information obtained at S3002 is written into the screened SC information (S3008). This means that the estimated SC information with key X1 could not be narrowed by the product attribute information 122. Here, the nine records that S3002 has found in the estimated SC information of Fig. 17 are written as is into the screened SC information as shown in Fig. 18.

Then, the SC screening unit 134 adds 1 to L (S3009) and returns to the steps S3002 and S3003 in the data retrieving unit 132. In the estimated SC information of Fig. 17, there are no records with the layer L (=3) and the process is ended.

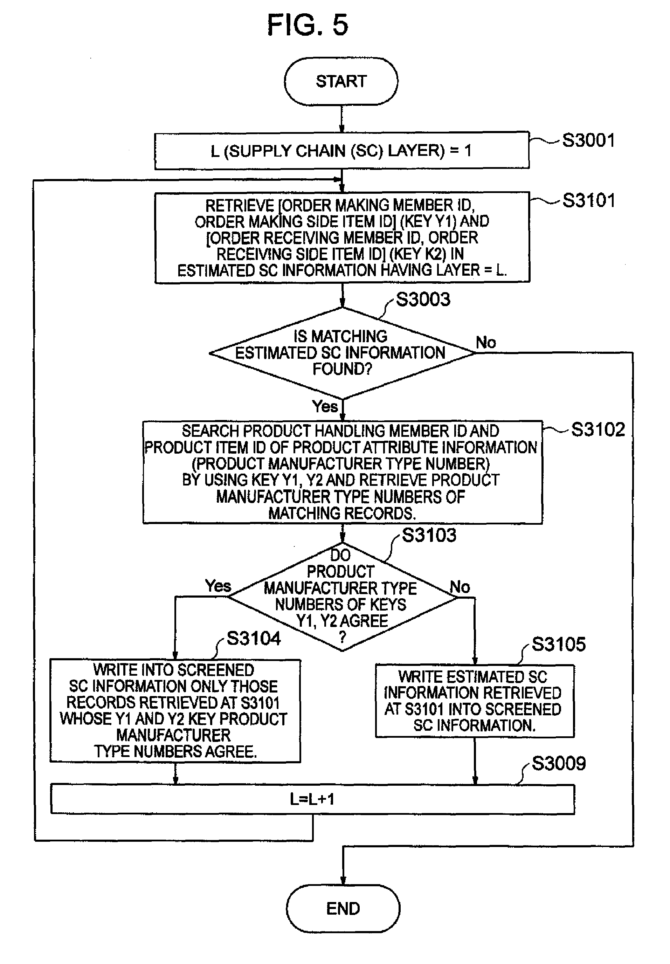

Next, the method of screening the estimated SC information using the product attribute information 122 (the information of the product manufacturer type number) of Fig. 12 will be explained by referring to the process flow shown in Fig. 5.

First, the SC screening unit 134 sets 1 in a constant L representing the layer of SC (S3001). The data retrieving unit 132 retrieves a combination of order making member ID and order making side item ID in the estimated SC information, both having a layer of L, and a combination of order receiving member ID and order receiving side item ID (S3101) and checks if there is any matching data (S3003). In the following explanation, the retrieved combination of order making member ID and order making side item ID is taken as a key Y1 [order making member ID, order making side item ID] and the combination of order receiving member ID and order receiving side item ID is taken as a key Y2 [order receiving member ID, order receiving side item ID]. In the estimated SC information of Fig. 17, there are four records with the layer L (=1). They have one Y1 key of [A1, a100] and four Y2 keys of [B1, b100], [B2, b200], [B3, b300] and [B4, b400].

Next, if S3003 finds any matching records in estimated SC information, the data retrieving unit 132 searches through the product handling member ID and the product item ID in the product attribute information 122 by using keys Y1 and Y2 to retrieve the product manufacturer type numbers of the matching records (S3102). Here, key Y1 is [A1, a100] and key Y2 is [B1, b100], [B2, b200], [B3, b300] and [B4, b400]. Therefore, in the product attribute information 122 of Fig. 12, a product manufacturer type number "c01" of the record that matches the Y2 key of [B1, b100] is retrieved.

Then, the SC screening unit 134 checks if the records retrieved from the estimated SC information by S3101 agree with keys Y1 and Y2 in the product manufacturer type number (S3103). In the estimated SC information of Fig. 17, none of the four records retrieved by S3101 has the product manufacturer type number that matches keys Y1 and Y2.

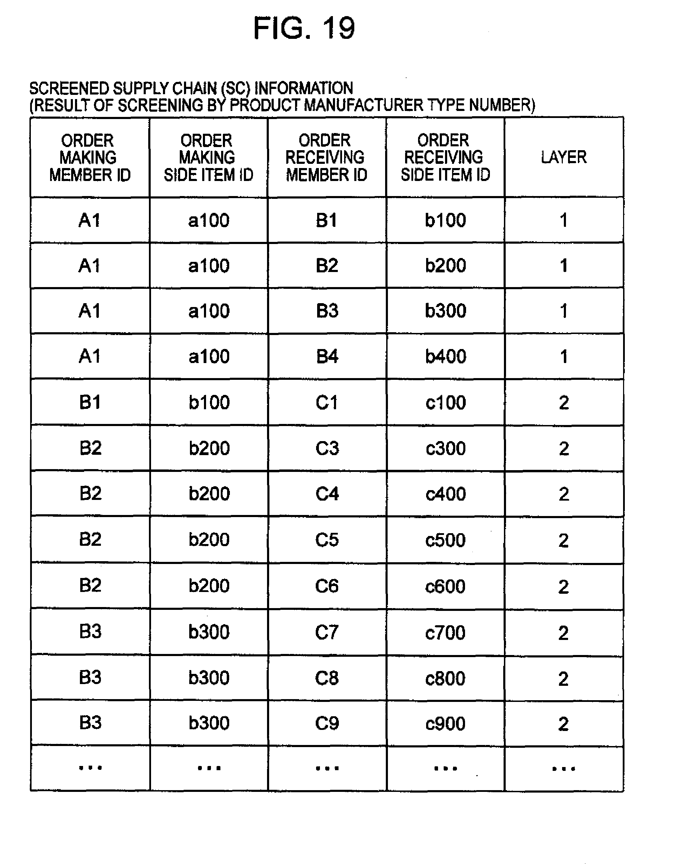

If in S3103 no record is found whose product manufacturer type number matches keys Y1 and Y2, the SC screening unit 134 writes the estimated SC information retrieved by S3101 into the screened SC information for storage in the memory unit (S3105). This means that the estimated SC information having keys Y1 and Y2 failed to be picked up from the product attribute information 122. Here, the four records that S3101 has retrieved from the estimated SC information of Fig. 17 are written as is into the screened SC information as shown in Fig. 19.

Then, the SC screening unit 134 adds 1 to L (S3009) and returns to the steps S3101 and S3003 in the data retrieving unit 132. In the estimated SC information of Fig. 17, there are nine records whose layer is L (=2). For Y1 key of [B1, b100], they have two Y2 keys of [C1, c100] and [C2, c200]; for Y1 key of [B2, b200], they have four Y2 keys of [C3, c300], [C4, c400], [C5, c500] and [C6, c600]; and for Y1 key of [B3, b300], they have three Y2 keys of [C7, c700], [C8, c800] and [C9, c900].

Next, the data retrieving unit 132 executes step S3102. Now, keys Y1 and Y2 are as described above and, from the product attribute information 122 of Fig. 12, records that match key Y1 [B1, b100] and key Y2 [C1, c100] give a product manufacturer type number of "c01".

Then, the SC screening unit 134 executes step S3103. In the estimated SC information of Fig. 17, only one of the nine records retrieved at S31 01 has the key Y1 [B1, b100] and key Y2 [C1, c100] whose product manufacturer type numbers, "c01", are the same.

If S3103 determines that the product manufacturer type numbers of key Y1 and key Y2 agree, the SC screening unit 134 performs as follows. Of the records with the same Y1 keys that S31 01 has retrieved from the estimated SC information, only those with the keys Y1 and Y2 that have the same product manufacturer type numbers are written into the screened SC information for storage in the memory unit 138. Here, of the two records retrieved by S3101 from the estimated SC information of Fig. 17 which have key Y1 [B1, b100], only the record with key Y1 [B1, b100] and key Y2 [C1, c100] is written into the screened SC information as shown in Fig. 19. If S3103 determines that the product manufacturer type numbers of key Y1 and key Y2 do not agree, the SC screening unit 134 executes step S3105 as described above.

Then, the SC screening unit 134 adds 1 to L (S3009) and returns to the steps S3101 and S3003 in the data retrieving unit 132. In the estimated SC information of Fig. 17, there are no records with the layer L (=3) and the process is ended.

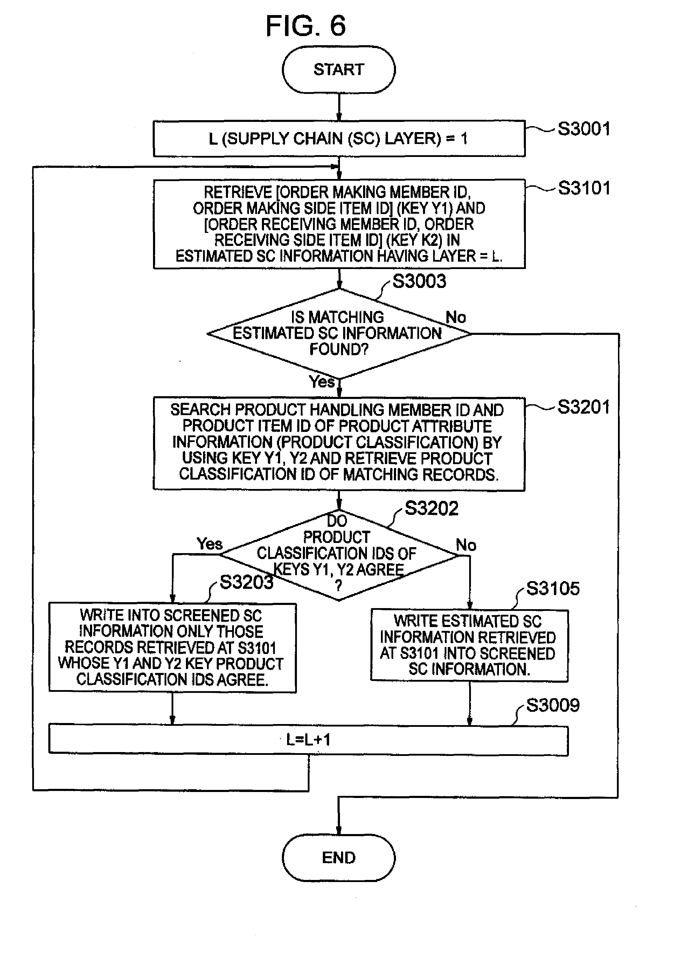

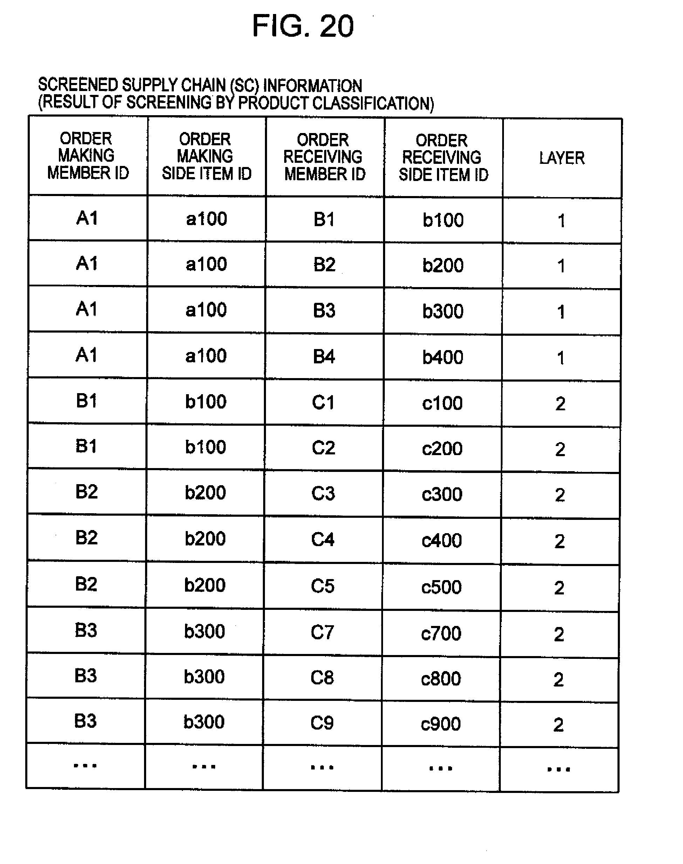

The method of screening the estimated SC information using the product attribute information 122 (the information of the product classification) of Fig. 13 is shown in the process flow of Fig. 6. The operation in the process flow of Fig. 6 is almost similar to that explained in Fig. 5, except that steps S3201, S3202 and S3203 use the information of the product classification of Fig. 13 instead of the information of the product manufacturer type number of Fig. 12 used by S3102, S3103 and S3104 in the process flow of Fig. 5, respectively. Screened SC information that is prepared from the estimated SC information of Fig. 17 by using the product attribute information 122 (the product classification) of Fig. 13 is shown in Fig. 20.

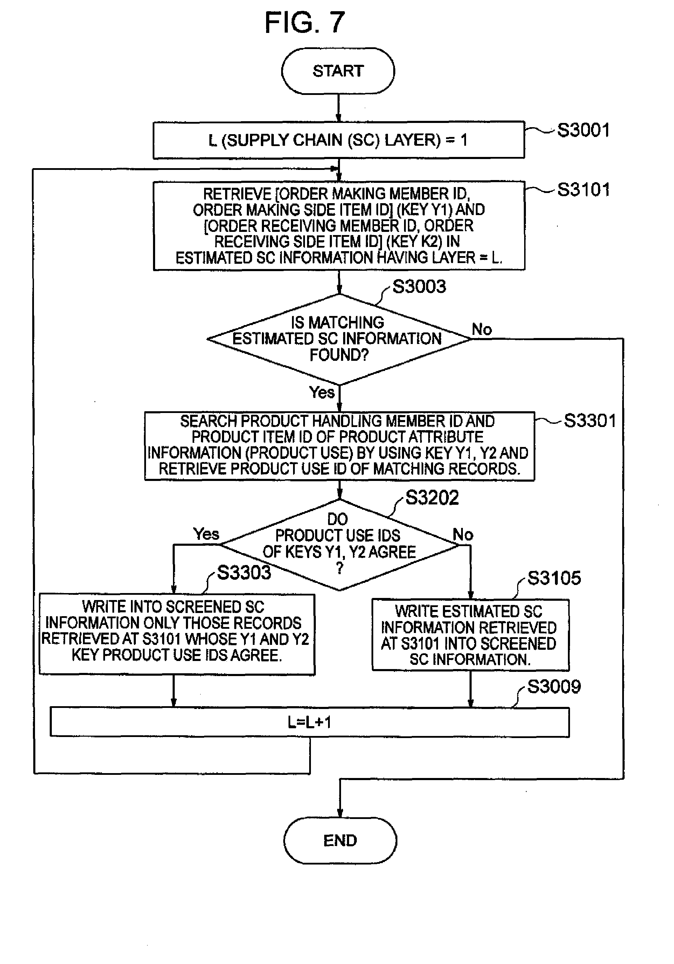

Finally, the method of screening the estimated SC information using the product attribute information 122 (the information of the product use) of Fig. 14 is shown in the process flow of Fig. 7.

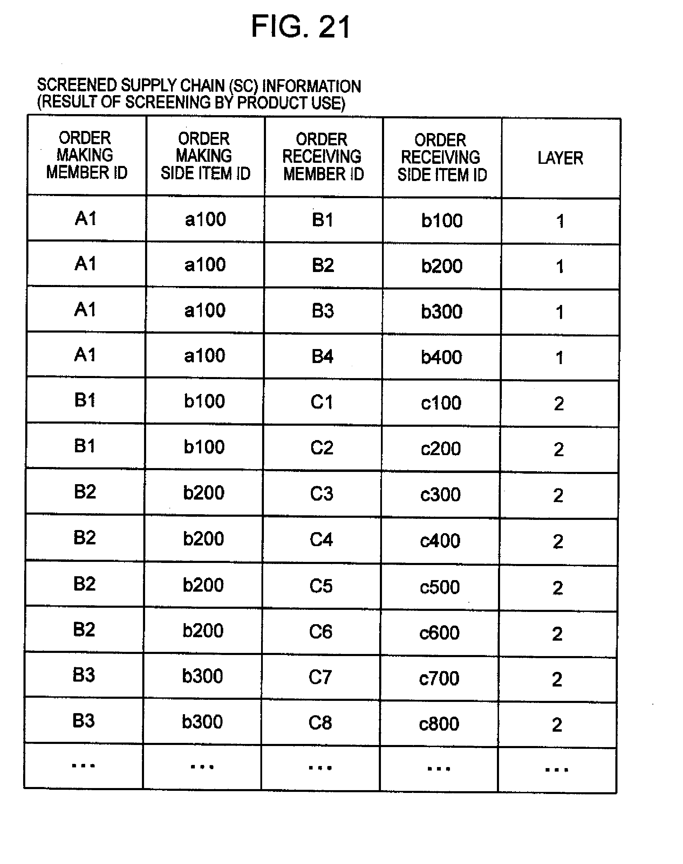

The operation in the process flow of Fig. 7 is almost similar to that explained in Fig. 5, except that steps S3301, S3302 and S3303 use the information of the product use in Fig. 14 instead of the information of the product manufacturer type number in Fig. 12 used by S3102, S3103 and S3104 in the process flow in Fig. 5, respectively. Screened SC information that is prepared from the estimated SC information of Fig. 17 by using the product attribute information 122 (the information of the product use) in Fig. 14 is shown in Fig. 21.

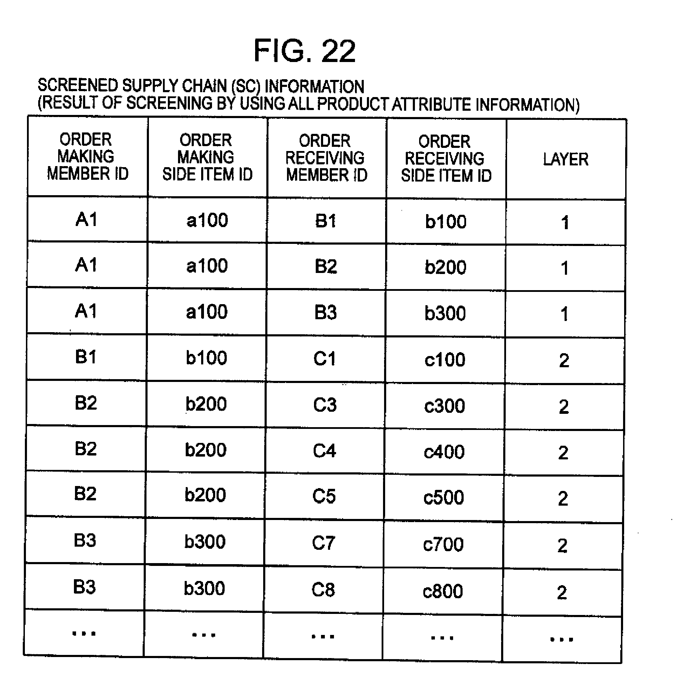

While this embodiment has shown the method of screening the estimated SC information by using each of the product attribute information 122 in Fig. 11 to Fig. 14, the screening may be done by using at least one of the product attribute information 122 in Fig. 11 to Fig. 14. The following explanation assumes that the screened SC information of Fig. 22 is prepared from the estimated SC information of Fig. 17 by using all of the product attribute information 122 in Fig. 11 to Fig. 14.

It is also possible to omit the process of screening the SC information that is performed by S103 in Fig. 1. In that case, the SC information estimated by the SC information estimation step at S102 is used as an input to the following step S104.

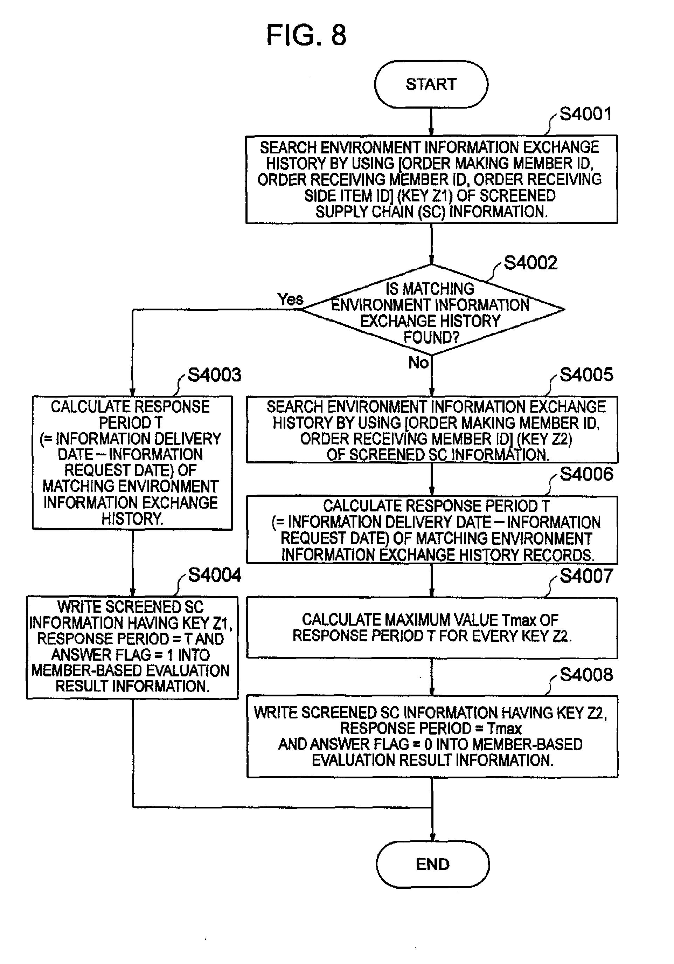

Then, in the process flow shown in Fig. 1, the response period evaluation unit 135 evaluates the response periods of individual members associated with the SC narrowed by the SC screening unit 134 (S104). Detailed operations in S104 will be explained by referring to the process flow of Fig. 8.

First, the data retrieving unit 132 searches through the environment information exchange history 123 by using order making member ID, order receiving member ID and order receiving side item ID of the screened SC information (S4001) and checks if there is any matching record (S4002). In the following explanation, a combination of [order making member ID, order receiving member ID, order receiving side item ID] is taken as a key Z1. Only when, in the screened SC information of Fig. 22, Z1 keys are [B2, C3, c300], [B3, C7, c700] and [A1, B1, b140], there are matching records in the environment information exchange history 123.

Next, the response period evaluation unit 135 calculates a response period T (= answer date - request date) taken to submit the environment information exchange history 123 found in S4002 (S4003). The response period is expressed by the number of days that pass from when an order making member has made a request to an order receiving member for environment information until the order receiving member delivers the requested information. In the environment information exchange history 123 of Fig. 15, records with Z1 keys of [B2, C3, c300], [B3, C7, c700] and [A1, B1, b100] are calculated to have response periods T of 10 days (= 08/05/30 - 08/05/20), 7 days (= 08/06/22 - 08/06/15) and 15 days (= 08/05/30 - 08/05/15), respectively.

Then, the response period evaluation unit 135 writes into member-based evaluation result information for storage in the memory unit 138 the order making member ID, order making side item ID, order receiving member ID, order receiving side item ID, layer and response period = T of those records of screened SC information which have the key Z1 used in the search at S4001, as well as answer flag = 1 (S4004). Here, as for the products of order receiving side item ID with the answer flag 1, their environment information has already been exchanged and thus these products are not evaluated for response period.

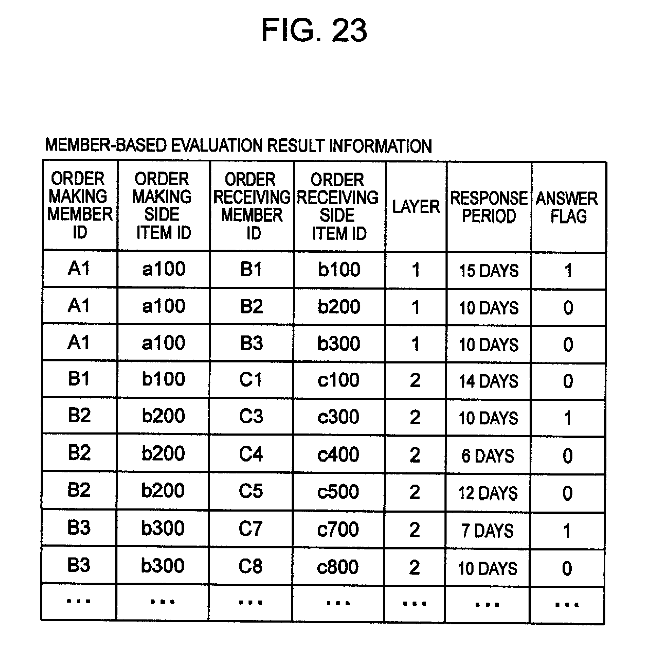

Of the records of screened SC information of Fig. 22, those with the key Z1 are entered in the member-based evaluation result information, with their answer flag = 1 set as shown in Fig. 23.

If, on the other hand, S4002 finds no record with the key Z1 in the environment information exchange history 123, the data retrieving unit 132 searches through the environment information exchange history 123 using the order making member ID and order receiving member ID of the screened SC information (S4005). In the following explanation, a combination of [order making member ID, order receiving member ID] used in the search is taken as key Z2. The screened SC information shown in Fig. 22 is considered here. While the search through the environment information exchange history 123 of Fig. 15 for the key Z1 [B1, C1, c100], for example, does not hit any records, the search using the key Z2 [B1, C1] produces two records with the order receiving side item ID of [c101] and [c102].

Next, the response period evaluation unit 135 calculates the response periods T for those records that S4005 has hit in the environment information exchange history 123 (S4006) and then calculates a maximum value of T, Tmax, for each Z2 key (S4007). In the environment information exchange history 123 shown in Fig. 15, the two records with the key Z2 [B1, C1] have response periods T of 14 days (order receiving side item ID = c101) and 10 days (order receiving side item ID = c102), respectively. The maximum value therefore is Tmax = 14 days.

Then, the response period evaluation unit 135 writes into the member-based evaluation result information for storage in the memory unit 138 the order making member ID, order making side item ID, order receiving member ID, order receiving side item ID, layer and response period = Tmax of those records of screened SC information which have the key Z2 used in the search at S4005, as well as answer flag = 0 (S4008), By executing the steps S4001 through S4008, the member-based evaluation result information of Fig. 23 is generated from the screened SC information of Fig. 22 and the environment information exchange history 123 of Fig. 15.

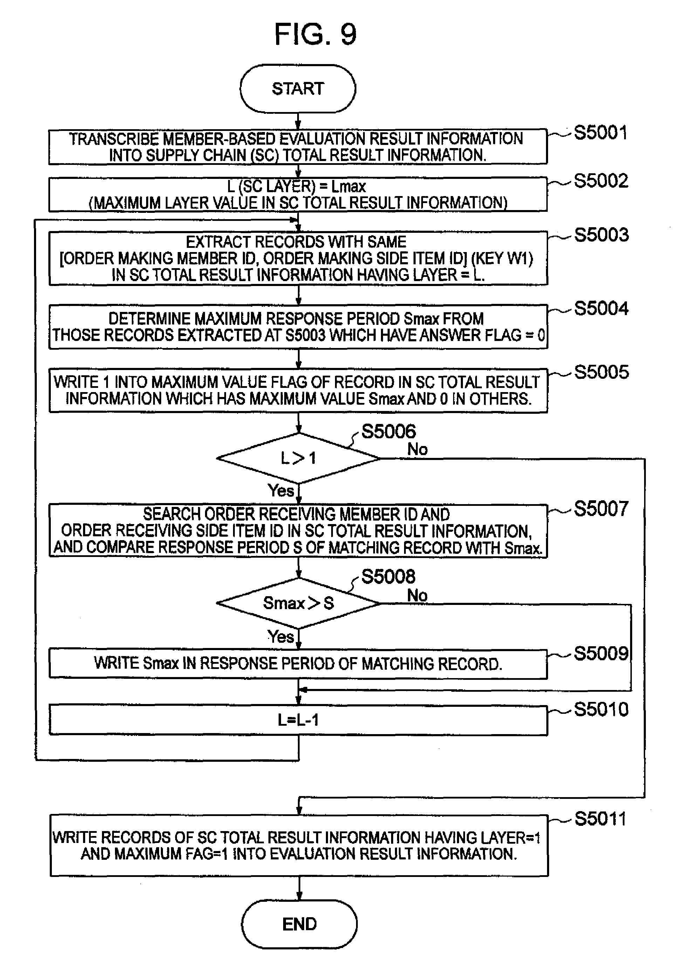

Then, in the process flow of Fig. 1, the response period tallying unit 136 totals the member-based evaluation result information prepared by the response period evaluation unit 135, according to the screened SC information prepared by the SC screening unit 134 (S105). Detailed operations in S105 will be explained by referring to the process flow of Fig. 9.

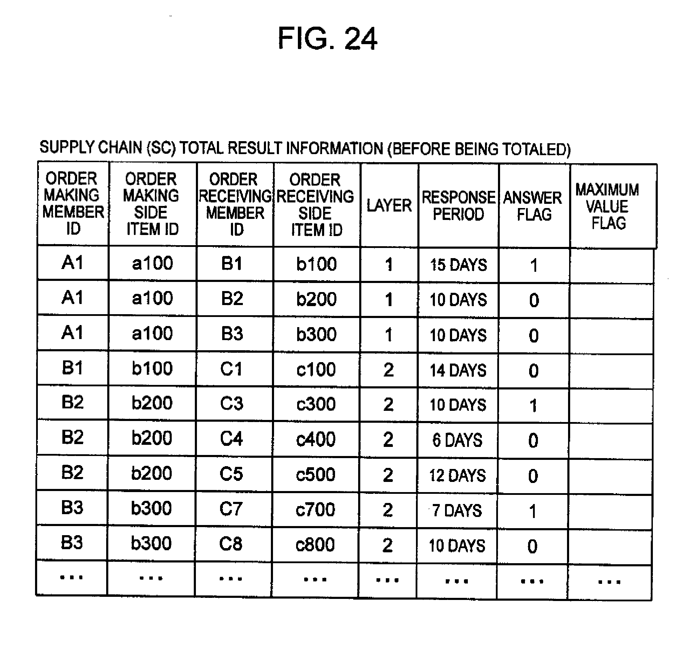

First, the member-based evaluation result information prepared at S104 is transcribed into SC total result information (S5001); and a maximum value of layer among the transcribed records of SC total result information is set in the constant L that represents the layer of SC (S5002). Transcribing the member-based evaluation result information of Fig. 23 into the SC total result information results in Fig. 24, and the maximum layer value of 2 in the SC total result information is set in L.

Next, from the records of the SC total result information with layer = L, those with the same order making member ID and the same order making side item ID are extracted (S5003). From these records, those with the answer flag = 0 are picked up and the maximum response period Smax is calculated (S5004). In the following explanation, the combination of [order making member ID, order making side item ID] is taken as key W1. In the SC total result information of Fig. 24, there are three records which, for example, have the layer L (=2) and the key W1 [B2, b200]. From the three records, those with the answer flag of 0 are used to calculate the maximum response period Smax, which is Smax =12 days.

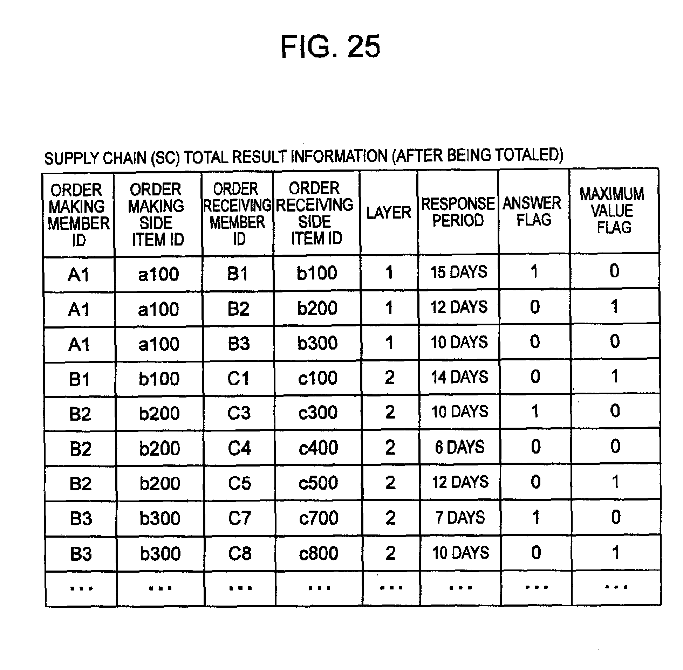

Then, in the SC total result information, a record with Smax is given a maximum value flag of 1 and others a maximum value flag of 0 before being stored in the memory unit 138 (S5005) and then a check is made to see if L>1 (S5006). In the SC total result information shown in Fig. 24, of the three records with key W1 [B2, b200], a record (order receiving member ID=C5) that has the response period of 12 days (=Smax) is written with 1 in the maximum value flag and two other records with the maximum value flag of 0, as shown in Fig. 25.

If L>1 at S5006, then the order receiving member ID and the order receiving side item ID in the SC total result information are searched using the key W1 to find any matching record. Then the response period S of the matching record is compared with Smax obtained at S5004 (S5007) to see if Smax is larger than S (S5008). If Smax > S, the response period of the matching record is replaced with Smax (S5009). Here L=2. So, when the order receiving member ID and order receiving side item ID in the SC total result information of Fig. 24 are searched using key W1 [B2, b200], for example, one matching record is found whose S is 10 days. Since Smax (=12 days) > S (=10 days), the response period of the matching record in the SC total result information of Fig. 24 is changed from 10 days to 12 days, as shown in Fig. 25.

Then, 1 is subtracted from L (S5010) and the operation returns to step S5003. In the SC total result information of Fig. 25, three records are extracted which have a layer L (=1) and key W1 [A1, a100]. Performing the steps S5004 and S5005 on these three records in the same was as described above results in the maximum value flag being written in the SC total result information, as shown in Fig. 25.

Next, a check is made as to whether L>1 (S5006). If the check result is other than L>1, then the order making member ID, order making side item ID and response period of a record in SC total result information which has a layer of 1 and a maximum flag of 1 are written into the evaluation result information 124 (S5011). Using the SC total result information of Fig. 25, evaluation result information 124 is obtained as shown in Fig. 16.

Finally in the process flow of Fig. 1, the result displaying unit 137 displays the information stored in the evaluation result information 124 on the terminals 101 through the input/output unit 110 and network 102 (S106). Here, on the terminals 101 is displayed the evaluation result information 124 of Fig. 16, for example, in a form of the response period (estimated value) of "12 days" as related to the user-entered evaluation information (member ID "A1", item ID "a100") as shown in Fig. 26.

In a SC involving multiple stages of various enterprises from a wide range of fields, even if a company (member) upstream in the SC cannot be identified, as when a new product is purchased from a supplier or a new business is initiated with a new supplier, this embodiment enables the user to evaluate the response period of individual suppliers in ways that take into account the influences of companies upstream in the SC, by using the order information exchanged among companies in their transactions, the product attribute information associated with the order information, and a history of environment information exchanged in the past among companies. This in turn allows the user to take proactive measures against its possible violations of rules, such as its delays in answering customer's request for information.

[Embodiment 2]

As another embodiment of this invention, a method of outputting a member which forms a bottleneck of the response period in the upstream SC when a result of evaluation on the response period of a supplier is output is described. The process flow in this embodiment may be the same as that shown in Fig. 1 and the function block diagram representing a system configuration may also be the same as that shown in Fig. 2. Now, referring to the process flow of Fig. 1, the operation of each function of the supplier evaluation system 100 in electronic commerce of Fig. 2 will be explained.

First, the input/output unit 110 accepts evaluation information which is entered from terminals 101 by a user. The data retrieving unit 132 writes the evaluation information received into the memory unit 138 (S101). In this embodiment, too, a case where member ID and item ID, used as the data to be evaluated, are "A1" and "a100" respectively, as shown in Fig. 26, will be described as follows.

Then, the data retrieving unit 132 searches the evaluation information to find order information 121, and the SC estimation unit 133 estimates an SC associated with the evaluation information (S102). In this embodiment, the SC estimation method is similar to that of embodiment 1. In the following explanation, it is assumed that the estimated SC information shown in Fig. 17 is prepared.

Next, the SC screening unit 134 narrows the estimated SC information of S102 by using the product attribute information 122 associated with the item to be evaluated (S103). In this embodiment, the SC screening method is similar to the one used embodiment 1. In the following explanation, it is assumed that the screened SC information shown in Fig. 22 is prepared.

Then, by using the environment information exchange history 123, the response period evaluation unit 135 evaluates the response periods of individual members associated with the SC narrowed down by the SC screening unit 134 (S104). In this embodiment, the SC screening method is similar to the one used in embodiment 1. In the following explanation, it is assumed that the member-based evaluation result information shown in Fig. 23 is prepared.

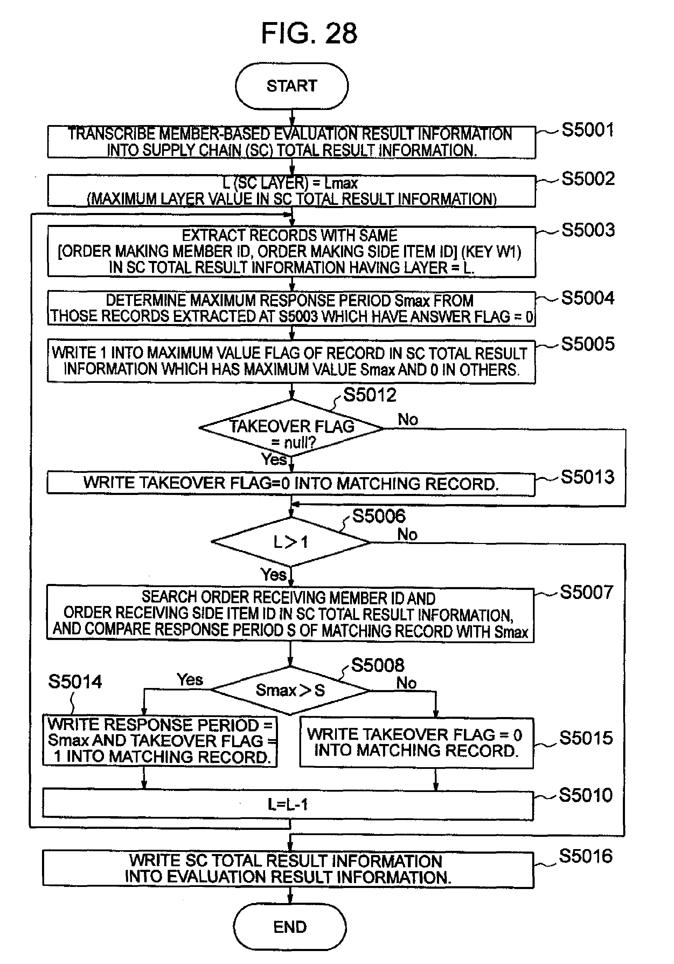

Further, the response period tallying unit 136, according to the screened SC information prepared by the SC screening unit 134, totals the member-based evaluation result information prepared by the response period evaluation unit 135 (S105). Here, detailed operations in S105 will be explained by referring to the process flow of Fig. 28.

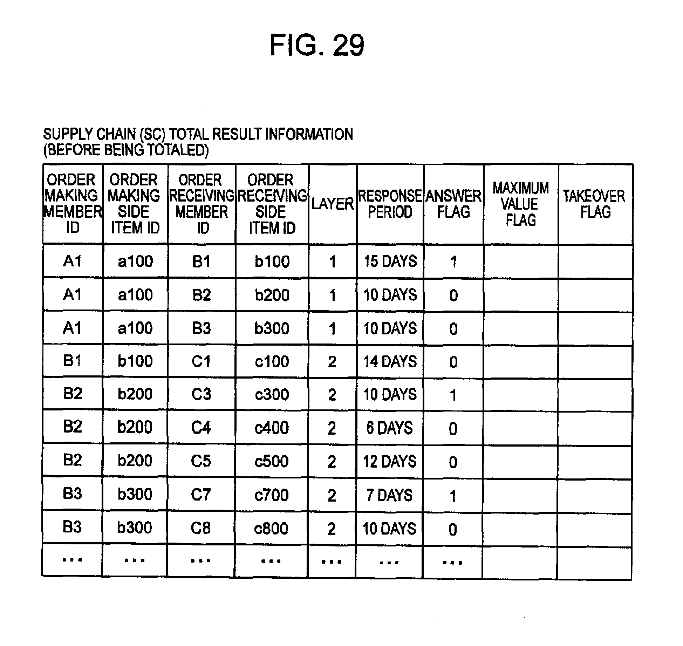

First, the member-based evaluation result information prepared at S104 is transcribed into the SC total result information (S5001); and a maximum layer value in the transcribed SC total result information is set in a constant L that represents the layer of SC (S5002). Transcribing the member-based evaluation result information of Fig. 23 into the SC total result information results in Fig. 29, and the maximum layer value of 2 in the SC total result information is set in L.

Next, from the records of the SC total result information with layer = L, those with the same order making member ID and the same order making side item ID are extracted (S5003). From these records, those with the answer flag = 0 are picked up and the maximum response period Smax is calculated (S5004). In the following explanation, the combination of [order making member ID, order making side item ID] is taken as key W1. In the SC total result information of Fig. 29, there are three records which, for example, have the layer L (=2) and the key W1 [B2, b200]. From the three records, those with the answer flag of 0 are used to calculate the maximum response period Smax, which is Smax= 12 days.

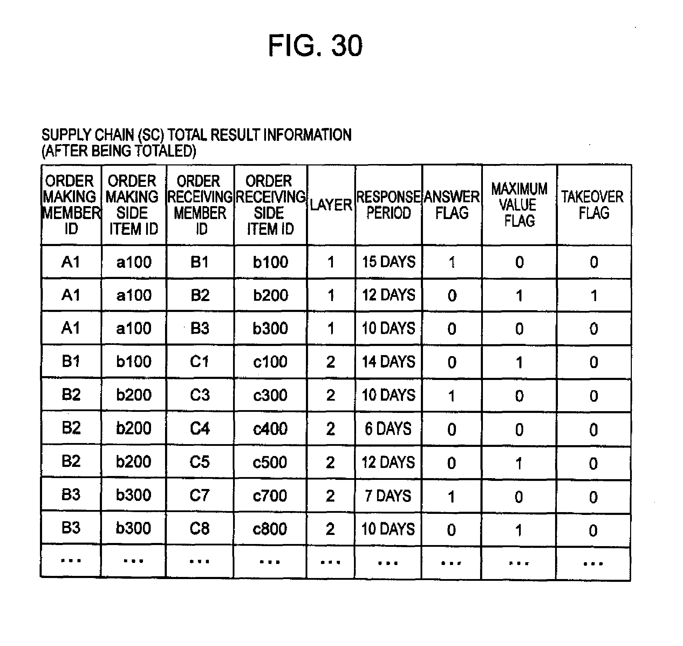

Then, in the SC total result information, a record with Smax is given a maximum value flag of 1 and others a maximum value flag of 0 (S5005); and a check is made as to whether a takeover flag of the record is null (S5012). If the result of the check is null, 0 is written in the takeover flag of the record. Further, the SC total result information is stored in the memory unit 138 (S5013). In the SC total result information of Fig. 29, of the three records with key W1 [B2, b200], a record (order receiving member ID=C5) that has the response period of 12 days (=Smax) is written with 1 in the maximum value flag and two other records with the maximum value flag of 0, as shown in Fig. 30. Further, in Fig. 29 because the takeover flags of these three records are null, 0 is written into the takeover flags of these records, as shown in Fig. 30. The takeover flag will be described later.

Next, a check is made as to whether L>1 (S5007). If L>1, a search is made on the order receiving member ID and order receiving side item ID in the SC total result information by using key W1; and the response period S of the matching record is compared with Smax to see if Smax is larger than S (S5008). If Smax>S, Smax is written over the response period S of the record and 1 is written in the takeover flag of the record (S5014). If Smax≤S, 0 is written in the takeover flag of the record (S5015). Here L=2. So, in the SC total result information of Fig. 29, when the order receiving member ID and order receiving side item ID are searched using key W1 [B2, b200], for example, one matching record is found whose S is 10 days. Since Smax (=12 days) > S (=10 days), the response period of the matching record is rewritten from 10 days to 12 days, with 1 written in the takeover flag, as shown in Fig. 30. On the other hand, in the SC total result information of Fig. 29, the Smax of a record having key W1 [B1, b100], for example, is 14 days. Searching the order receiving member ID and order receiving side item ID by using the key W1 [B1, b100] finds that the matching record has a response period S of 15 days. Here, since Smax (=14 days) ≤ S (=15 days), 0 is written in the takeover flag of the matching record in the SC total result information of Fig. 29, as shown in Fig. 30. The takeover flag shows that the response period of a particular member is exceeded by the response period of another member upstream of the first member in the supply chain, suggesting that the information delivery may be affected by response delays in the upstream supply chain.

Then, 1 is subtracted from L (S5010) and the operation returns to step S5003. In the SC total result information of Fig. 29, three records are extracted which have a layer L (=1) and key W1 [A1, a100]. Performing the steps S5004 and S5005 on these three records in the same was as described above results in the maximum value flag being written in the SC total result information, as shown in Fig. 30. Further, the decision at S5012 finds that the takeover flag has already been written into at S5014 or S5015. So, S5013 is not executed.

Next, a check is made as to whether L>1 (S5006). If the check result is other than L>1, then the SC total result information is written into the evaluation result information 124 (S5016). In this embodiment, the SC total result information shown in Fig. 30 is taken, as is, to be the evaluation result information 124.

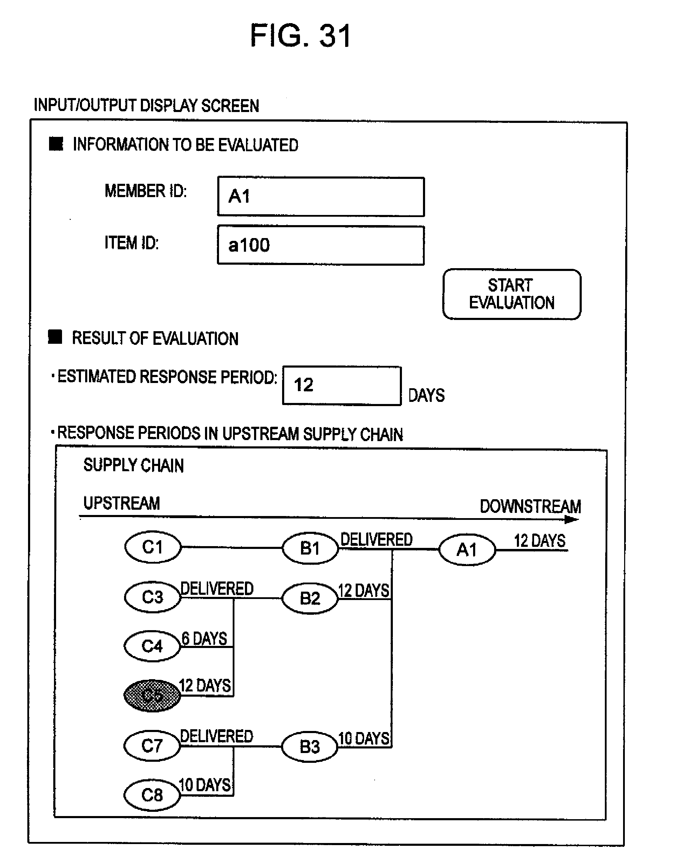

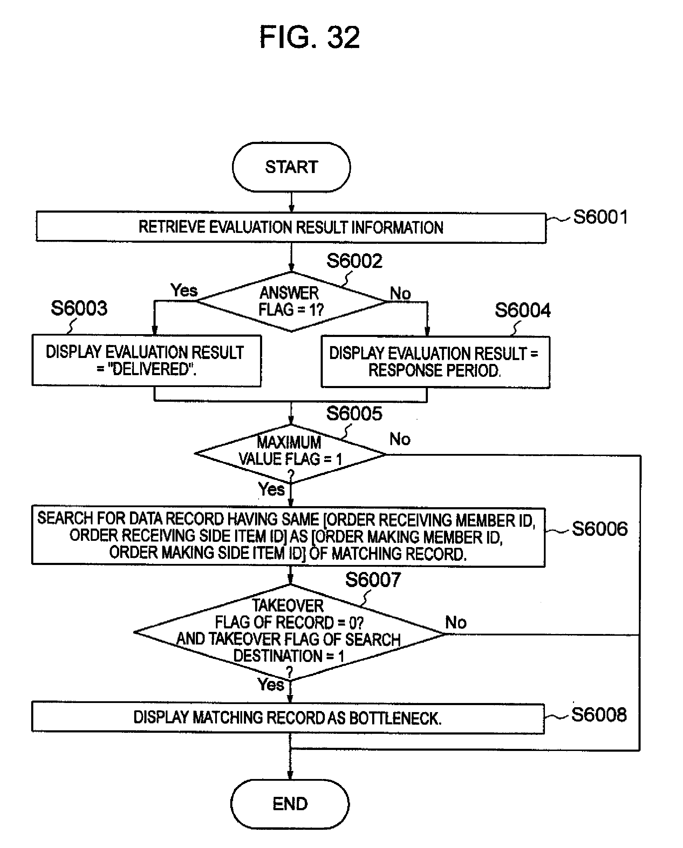

Finally, in the process flow of Fig. 28, the result displaying unit 137 displays the information stored in the evaluation result information 124 on the terminals 101 through the input/output unit 110 and network 102 (S106). Here, on the terminals 101 is displayed the evaluation result information 124 of Fig. 30, for example, in a form of the response period (estimated value) of "12 days" as related to the user-entered evaluation information (member ID "A1", item ID "a100") as shown in Fig. 31. Further, as shown in Fig. 31, response periods of other members in the supply chain upstream of the current evaluation information are displayed. The method of displaying the response periods in the upstream supply chain will be explained in detail by referring to the process flow of Fig. 32.

First, the data retrieving unit 132 retrieves the evaluation result information 124 (S6001); and the result displaying unit 137 checks to see if the answer flag is 1 (S6002). If the answer flag is found to be 1, the evaluation result of the record is displayed as "delivered" (S6003). If the answer flag is found to be 0, the evaluation result of the record shows the response period of the evaluation result information 124 (S6004). In the evaluation result information 124 shown in Fig. 30, a record whose order making member ID and order receiving member ID are "A1" and "B1" respectively, for example, has an answer flag of 1. So, in an evaluation result field on the input/output display of Fig. 31 between "A1" and "B1", "delivered" is shown. This indicates that information related to the members and items of interest, which are located between the members "A1" and "B1", is already delivered and therefore removed from evaluation. On the other hand, for a record whose order making member ID and order receiving member ID are "A1" and "B2" respectively, for example, the answer flag is 0, So, in an evaluation result field on the input/output display of Fig. 31 between "A1" and "B2", the response period of the record, "12 days", is displayed.

Next, the result displaying unit 137 checks to see if the maximum value flag of the evaluation result information 124 is 1 (S6005). For each record with the maximum value flag of 1, a search is conducted to pick up a record having the same order receiving member ID and order receiving side item ID as the order making member ID and order making side item ID of the first record (S6006). In the evaluation result information 124 shown in Fig. 30, a record whose order making member ID, order making side item ID, order receiving member ID and order receiving side item ID are "B1", "b100", "C1" and "c100" respectively (referred to as record (1)) and a record with "B2", "b200", "C5" and "c500" (referred to as record (2)), for example, have the maximum value flag of 1. So, executing the step S6006 results in two records being found, one with "A1", "a100", "B1" and "b100" as order making member ID, order making side item ID, order receiving member ID and order receiving side item ID respectively (referred to as record (3)) and one with "A1", "a100", "B2" and "b200" (referred to as record (4)).

Further, a check is made as to whether the takeover flag of the record of interest is 0 and whether the takeover flag of a search destination record is 1 (S6007). A record that satisfies these is displayed as a bottleneck (S6008). For example, in the evaluation result information 124 shown in Fig. 30, the record (1) has a takeover flag of 0 and the search destination record (3) a takeover flag of 0, while the record (2) has a takeover flag of 0 and the search destination data (4) a takeover flag of 1. So, as shown in Fig. 31, the order receiving member ID in the record (2) is displayed in gray to be easily recognized as a response period bottleneck in the upstream supply chain.

This embodiment allows the user to view a result of evaluation of not just a supplier of interest but a supply chain upstream of the supplier and to locate a bottleneck in the response period taken to deliver requested information. This in turn allows the user to take measures proactively and efficiently against its possible violation of rules, such as its delays in delivering requested information to a customer.

[Embodiment 3]

As still another embodiment of this invention, a method of narrowing the estimated SC by using the kind and quantity of environment information exchanged among companies.

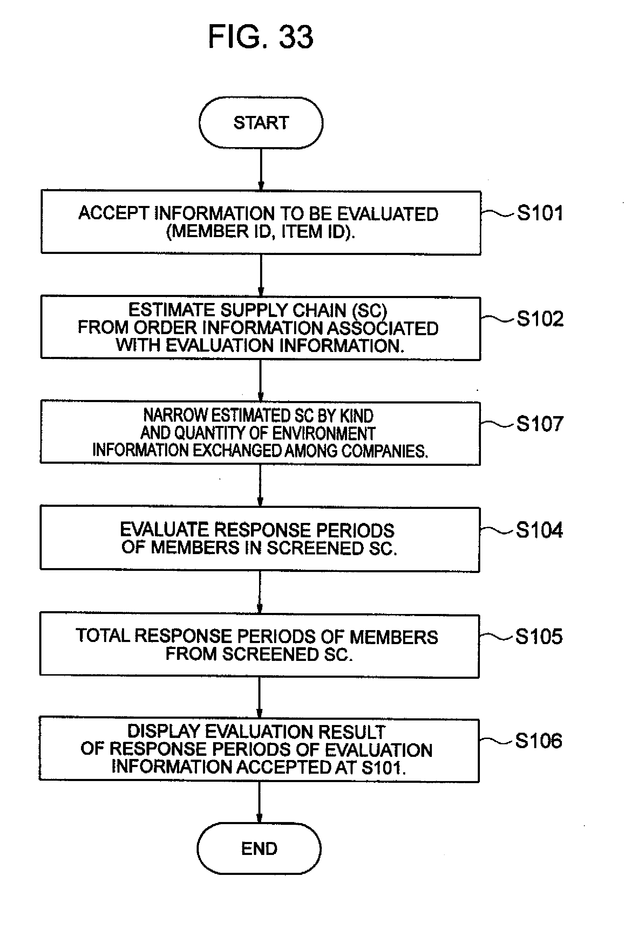

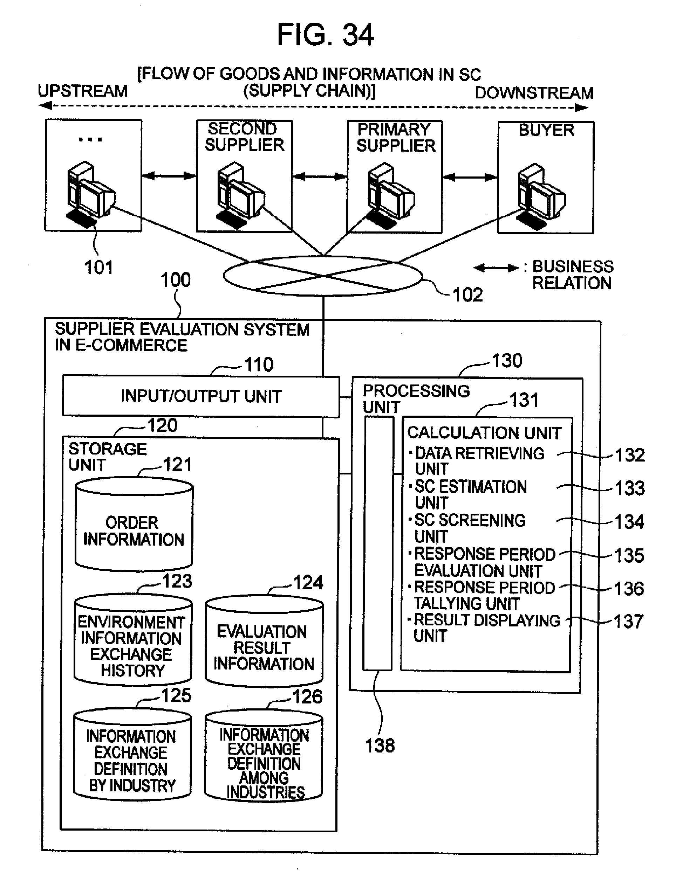

In this embodiment Fig. 33 is used as a process flow instead of Fig. 1, and Fig. 34 is used as a function block diagram representing a system configuration instead of Fig. 2.

In Fig. 34, the supplier evaluation system 100 in electronic commerce, terminals 101, network 102, input/output unit 110 and processing unit 130 are identical with those of embodiment 1 shown in Fig. 2, and their explanations are omitted.

The storage unit 120 is constructed of a hard disk drive or memory and stores order information 121, environment information exchange history 123, information exchange definition by industry 125 and information exchange definition among industries 126, all these constituting input data to the processing unit 130, and also evaluation result information 124 which constitutes output data from the processing unit 130.

The order information 121 is the same as the one shown in Fig. 2 of embodiment 1, and its explanation is omitted.

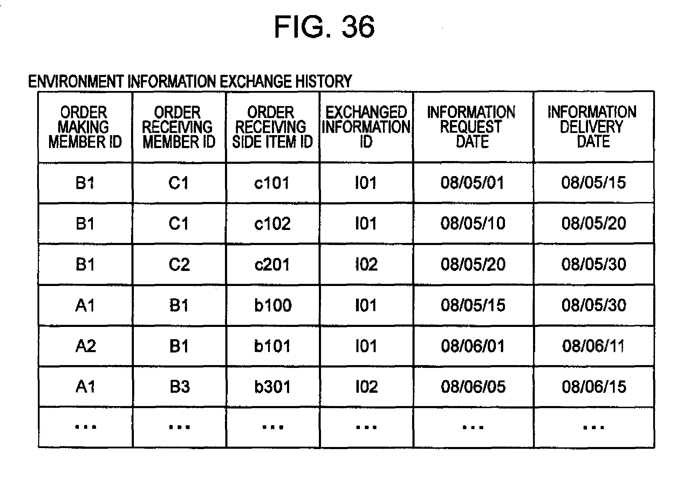

The environment information exchange history 123 is used to manage the history of environment information exchange among companies and, as shown in Fig. 36 for example, comprises information of an order making member ID, an order receiving member ID, an order receiving side item ID, an exchanged information ID, a information request date and a information delivery date. The exchanged information ID is an ID to identify the kind of environment information exchanged among companies and is assigned to each kind of environment information, such as MSDSplus and AIS (Article Information Sheet) specified by JAMP (Joint Article Management Promotion-consortium).

The evaluation result information 124 is identical with the one shown in Fig. 2 of embodiment 1 and its explanation is omitted.

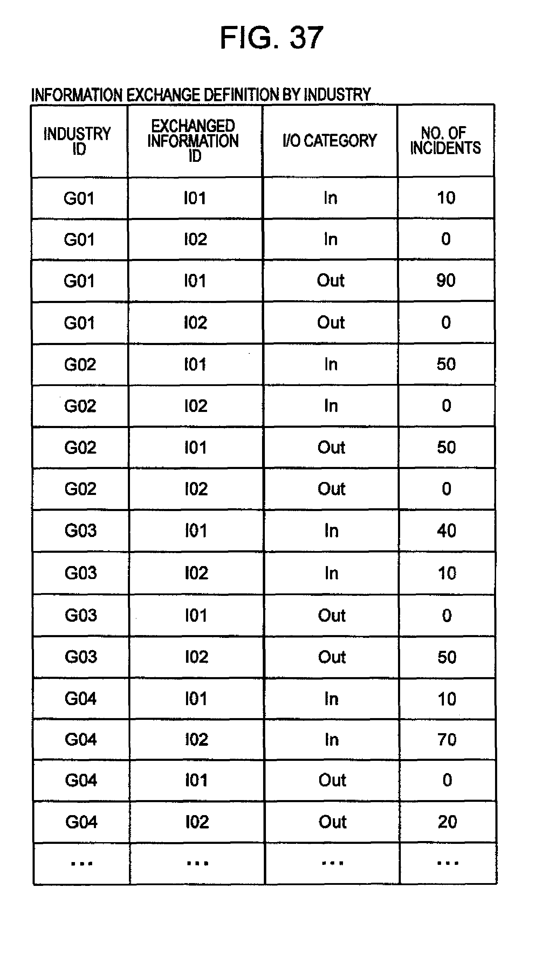

The information exchange definition by industry 125 defines a reference value in each industry of input/output quantity of environment information exchanged among members and, as shown in Fig. 37 for example, comprises information of an industry ID, an exchanged information ID, an input/output category and the number of incidents. The information exchange definition by industry 125 of Fig. 37 shows that an industry with industry ID of "G01" has "10" and "0" incidents where it received environment information, whose exchanged information IDs are "101" and "102", from suppliers and "90" and "0" incidents where it supplied the information to customers.

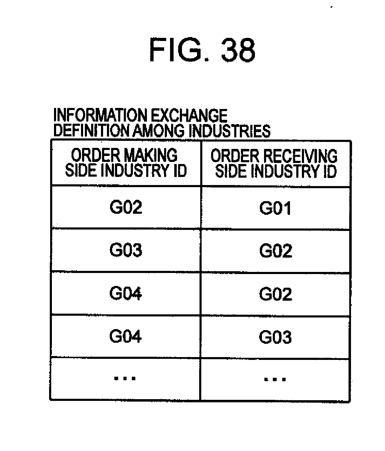

The information exchange definition among industries 126 shows in which direction among industries the environment information is supplied and, as shown in Fig. 38 for example, comprises information of an order making side industry ID and an order receiving side industry ID. In the information exchange definition among industries 126 of Fig. 38, it is seen for example that business is commonly conducted between order making members with industry ID of "G02" and order receiving members with industry ID of "G01" and that environment information is supplied from "G01" to "G02".

Next, according to the process flow of Fig. 33, the operation of each function of the supplier evaluation system 100 in electronic commerce of Fig. 34 will be explained.

Since the step S101 and S102 are identical with the corresponding steps of embodiment 1, their explanations are omitted. In this embodiment, it is assumed that the estimated SC information of Fig. 17 is prepared by S102, as in embodiment 1.

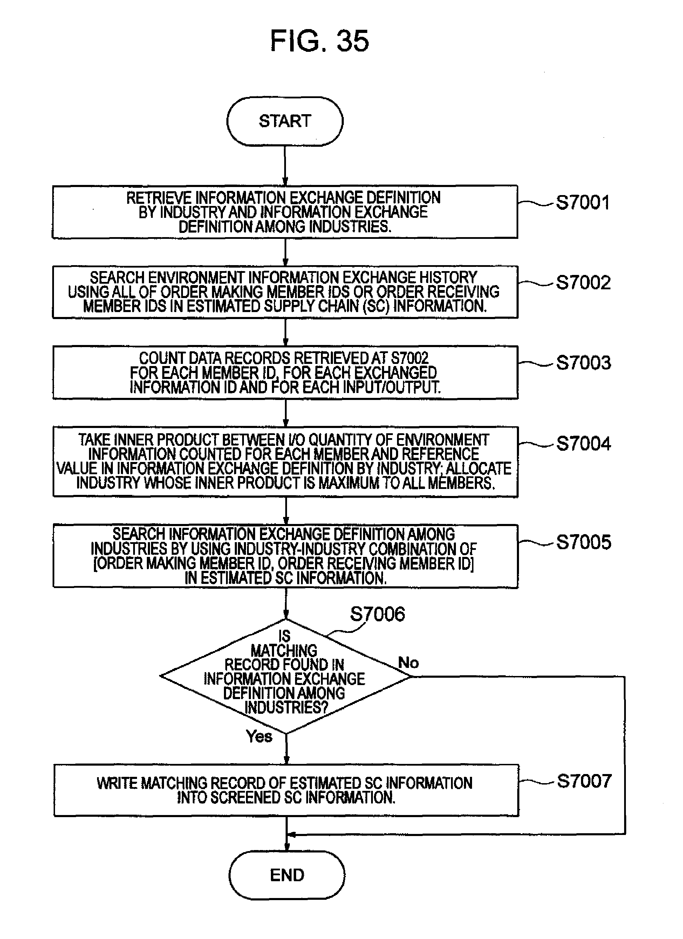

Next, the SC screening unit 134 narrows the estimated SC information by using the kind and quantity of the environment information exchanged among companies (S107). Now, the method of narrowing the estimated SC information in this embodiment will be explained by referring to the process flow of Fig. 35.

First, the data retrieving unit 132 retrieves the information exchange definition by industry 125 and the information exchange definition among industries 126 (S7001). In the following explanation, it is assumed that the information exchange definition by industry 125 of Fig. 37 and the information exchange definition among industries 126 of Fig. 38 are prepared.

Next, the data retrieving unit 132 searches the environment information exchange history 123 by using all of the order making member IDs or order receiving member IDs in the estimated SC information and finds matching records (S7002). When the order making member ID and order receiving member ID of the environment information exchange history 123 are searched by using the order making member ID "A1" and order receiving member ID "B1" of the estimated SC information of Fig. 17, for example, records shown in Fig. 36 are obtained. In the following explanation, it is assumed that the environment information exchange history 123 of Fig. 36 has been obtained.

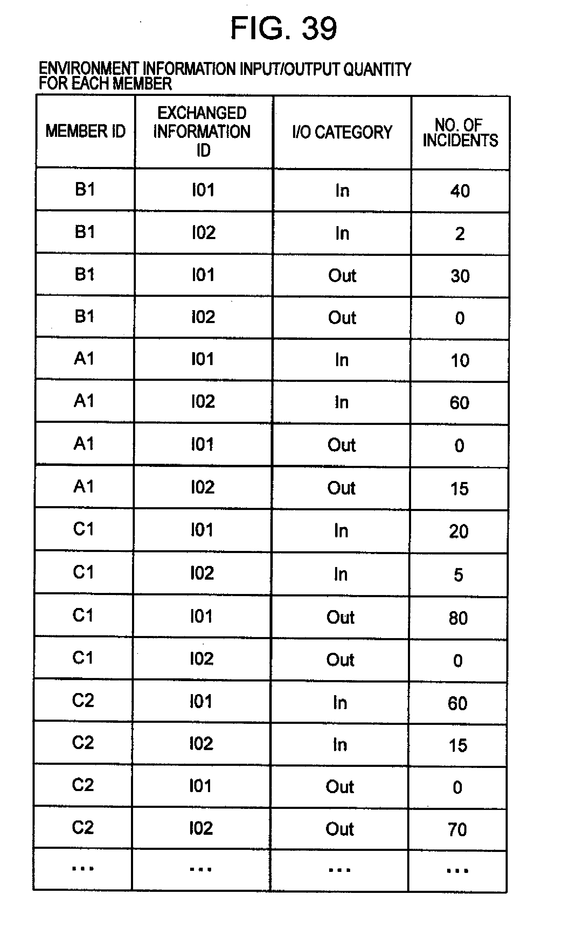

Then, the SC screening unit 134 counts the records obtained at S7002 for each member ID, for each exchanged information ID and for each input/output category (S7003). In the environment information exchange history 123 of Fig. 36, a record whose order making member ID, order receiving member ID, order receiving side item ID and exchanged information ID are "B1", "C1", "c101" and "101" indicates that one incident occurred in which information with the environment information kind of "101" was supplied from member ID "C1" to "B1". Then in a member-based environment information input/output quantity of Fig. 39,1 1 is added to the number of incidents in a record whose member ID, exchanged information ID and input/output category are "B1", "101" and "In" respectively and in a record with "C1", "I01" and "Out". In the following explanation, it is assumed that the above count operation has produced the member-based environment information input/output quantity of Fig. 39.

Then, the SC screening unit 134 takes an inner product between the input/output quantity of environment information counted for each member and the reference value for each industry in the information exchange definition by industry 125 and assigns the industry having a maximum inner product to each member (S7004). Here, a combination of the exchanged information ID and the input/output category is taken as i. In this combination, the number of incidents of environment information exchange for each member and the reference value for each industry are assumed to be $n_i$ and $m_i$, respectively. If we let i in the [exchanged information ID, input/output category] combinations of [101, In], [102, In], [101, Out] and [102, Out] be 1, 2, 3 and 4, the numbers of incidents of environment information exchange ($n_1$, $n_2$, $n_3$, $n_4$) for the member ID "B1" are (40, 2, 30, 0). In the information exchange definition by industry 125 of Fig. 37, the reference values by industry ($m_1$, $m_2$, $m_3$, $m_4$) for the industry ID "G01" are then (10, 0, 90,0). Next, the inner product described above is calculated by expression 1.

$$\sum_{i=1}^{k} n_i m_i \qquad \dots \text{(Expression 1)}$$

(where k is the number of [exchanged information ID, input/output category] combinations.)

It is also possible, as shown in expression 2 and expression 3, to calculate $n'_i$, $m'_i$ by normalizing $n_i$, $m_i$ and replace $n_i$, $m_i$ in expression 1 with $n'_i$, $m'_i$ respectively in calculating the inner product.

$$n'_i = n_i \Big/ \sqrt{\sum_{i=1}^{k} n_i^2} \qquad \dots \text{(Expression 2)}$$

$$m'_i = m_i \Big/ \sqrt{\sum_{i=1}^{k} m_i^2} \qquad \dots \text{(Expression 3)}$$

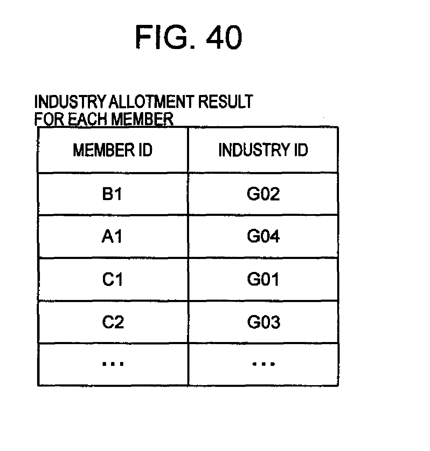

The calculation of the inner product shown in the expression 2 is performed for all industries in the information exchange definition by industry 125 of Fig. 37. Then assigning the industry ID which has the largest inner product to individual members shown in Fig. 39 produces a member-based industry allotment result as shown in Fig. 40.

Further, the SC screening unit 134 searches the information exchange definition among industries 126 by using the [order making member ID, order receiving member ID] combination in the estimated SC information for each industry (S7005) and checks to see if there is any matching record (S7006)

In the estimated SC information of Fig. 17, an example record is considered which has order making member ID of "A1" and order receiving member ID of "B1. From the member-based industry allotment result of Fig. 40, it is seen that these members have industry ID of "G04" and "G02" respectively. When the order making side industry ID and order receiving side industry ID in the information exchange definition among industries 126 of Fig. 38 is searched by using this industry ID combination, a matching record is found. This record is written in the screened SC information. On the other hand, a record with order making member ID of "B1" and order receiving member ID of "C2" is taken up for example. The member-based industry allotment result of Fig. 40 shows that these members have industry ID of "G02" and "G03" respectively. Searching the order making side industry ID and order receiving side industry ID of the information exchange definition among industries 126 of Fig. 38 finds no matching record. So, no record is written in the screened SC information.

Then, in the process flow of Fig. 33 steps S104 to S106 are executed. The operations of S104 to S106 are identical with those of embodiment 1 and their explanations are omitted.

Although this embodiment has been described in the process flow of Fig. 33 to narrow the estimated SC by replacing S103 in the process flow of Fig. 1 with S107 and executing it, it is possible to execute both S103 and S107 in narrowing the estimated SC.

By focusing on the fact that the kind and quantity of the environment information being handled vary from one industry to another, this embodiment allots industry to each member and narrows down the upstream supply chain according to a general supply chain between industries. This improves the accuracy of the narrowing operation.

It should be further understood by those skilled in the art that although the foregoing description has been made on embodiments of the invention, the invention is not limited thereto and various changes and modifications may be made without departing from the spirit of the invention and the scope of the appended claims.

**Claims**

1.  A supplier evaluation system (100) in electronic commerce, conducted by a plurality of companies via a communication network, to evaluate response periods that suppliers as trading partners take to deliver requested environment information, in order to observe a regulation that makes it mandatory for suppliers to submit within a specified time limit environment information, including at least the name and mass of chemical substances contained in a product, or to meet a deadline specified in a contract with a customer, the supplier evaluation system comprising:

    an input/output unit (110) to accept at any time, via a network from terminals of members engaged in commercial transactions, order information (121) representing a history of orders for products traded among the members and environment information exchange history information (123) representing a history of exchange of the environment information among the members, and then to register these information with a storage unit (120);
    the storage unit (120) to store the order information (121), the environment information exchange history information (123) and product attribute information (122), the product attribute information being supplementary information on products traded among the members;
    the input/output unit (110) to accept an input from a user of information to be evaluated, or evaluation information, that has at least a member ID of a trading partner and an item ID; and
    a processing unit (130) to estimate a supply chain by searching the order information (121) using the member ID of the evaluation information,
    to narrow the estimated supply chain information by searching the product attribute information (122) using the member ID and item ID of the evaluation information,
    to prepare member-based evaluation result information (124) by searching the environment information exchange history information (123) using the member ID and item ID of the screened supply chain information, the member-based evaluation result information representing a result of evaluating response periods taken by individual members to deliver requested information,
    to perform a tally operation to replace a maximum response period of a downstream member in the supply chain with a maximum response period of an upstream member in the supply chain, by searching the member-based evaluation result information (124) for those records having the same combinations of member ID and item ID, and
    to output from the supply chain total result information to a user terminal through the input/output unit (110) an evaluation value on the response period of the member being evaluated.

2.  A supplier evaluation system in electronic commerce according to claim 1,
    wherein the product attribute information (122) stored in the storage unit (120) is arranged in the form of databases for one or more kinds of information about products traded among the members, including product constituent procured item information, product manufacturer type number information, product classification information and product use information;
    wherein each database for a different kind of product attribute information (122) comprises data records, each having its product attribute information (122) related to a combination of member ID and product item ID;
    wherein, in the process where the product attribute information (122) is searched by using the member ID and item ID of the evaluation information to narrow the estimated supply chain information, the processing unit individually searches a database made up of data records of one kind of product attribute information (122) or a database made up of data records of two or more kinds of product attribute information (122) to narrow the estimated supply chain information.

3.  A supplier evaluation system in electronic commerce according to claim 1, wherein, in addition to the process of performing a tally operation to replace a maximum response period of a downstream member in the supply chain with a maximum response period of an upstream member in the supply chain, by searching the member-based evaluation result information (124) for data records having the same combinations of member ID and item ID, the processing unit adds a takeover flag to a data record of the downstream member who has its maximum response period replaced with that of the upstream member and records the data record;
wherein, in addition to the process of outputting from the supply chain total result information to a user terminal through the input/output unit (110) an evaluation value on the response period of the member being evaluated, the processing unit searches the supply chain total result information for a data record having the same order receiving member ID and item ID as the order making member ID and item ID, identifies, from the takeover flag of the data record and the takeover flag of the search destination, an upstream member which constitutes a response period bottleneck, and displays the member being evaluated and a supply chain upstream of the member on the user terminal to clearly show the response periods of individual members and response period bottlenecks.

**4.** A supplier evaluation system in electronic commerce according to claim 1,
wherein an exchanged information ID that identifies the kind of environment information is added to the environment information exchange history information (123) stored in the storage unit (120), and further, an information exchange definition by industry (125) and an information exchange definition among industries (126) are stored in the storage unit (120), the information exchange definition by industry (125) defining reference values by industry for input/output quantities of environment information exchanged among the members, the information exchange definition among industries representing a direction in which the environment information is presented among industries;
wherein, instead of narrowing the estimated supply chain information by searching the product attribute information (122) using the member ID and item ID of the evaluation information, the processing unit searches the environment information exchange history (123) using all of the order making member IDs or order receiving member IDs in the estimated supply chain information,
counts the retrieved data for each member ID, for each exchanged information ID and for each input/output,
takes an inner product between the input/output quantity of the environment information counted for each member and the reference value by industry in the information exchange definition by industry (125) and assigns the industry having the maximum inner product to each member,
searches the information exchange definition among industries (126) using a combination of order making member ID's industry and order receiving member ID's industry in the estimated supply chain information, and
when a matching data record is found in the information exchange definition among industries (126), writes the associated estimated supply chain information into the screened supply chain information to narrow the supply chain.

**5.** A supplier evaluation system in electronic commerce, conducted by a plurality of companies via a communication network, to evaluate response periods that suppliers as trading partners take to deliver requested environment information, in order to observe a regulation that makes it mandatory for suppliers to submit within a specified time limit environment information, including at least the name and mass of chemical substances contained in a product, or to meet a deadline specified in a contract with a customer, the supplier evaluation system comprising:

an input/output unit (110) to accept at any time, via a network from terminals of members engaged in commercial transactions, order information (121) representing a history of orders for products traded among the members and environment information exchange history information (123) representing a history of exchange of the environment information among the members, and then to register these information with a storage unit (120);
the storage unit (120) to store the order information (121), the environment information exchange history information (123) and product attribute information (122), the product attribute information being supplementary information on products traded among the members;
the input/output unit (110) to accept an input from a user of information to be evaluated, or evaluation information, that has at least a member ID of a trading partner and an item ID; and
a processing unit to estimate a supply chain by searching the order information (121) using the member ID of the evaluation information,
to prepare member-based evaluation result information (124) by searching the environment information exchange history information (123) using the member ID and item ID of the estimated supply chain information, the member-based evaluation result information representing a result of evaluating response periods taken by individual members to deliver requested information,
to perform a tally operation to replace a maximum response period of a downstream member in the supply chain with a maximum response period of an upstream member in the supply chain, by searching the member-based evaluation result information (124) for those records having the same combinations of member ID and item ID, and
to output from the supply chain total result information to a user terminal through the input/output unit (110) an evaluation value on the response period of the member being evaluated.

**6.** A supplier evaluation method in electronic commerce, conducted by a plurality of companies via a communication network, to evaluate response periods that suppliers as trading partners take to deliver requested environment information, in order to observe a regulation that makes it mandatory for suppliers to submit within a specified time limit environment information, including at least the name and mass of chemical substances contained in a product, or to meet a deadline specified in a contract with a customer, the supplier evaluation method comprising the steps of:

accepting at any time, via a network from terminals of members engaged in commercial transactions, order information (121) representing a history of orders for products traded among the members and environment information exchange history information (123) representing a history of exchange of the environment information among the members, and then registering these information with a storage unit (120);

storing product attribute information (122) in a storage unit (120) in advance, in addition to the order information (121) and the environment information exchange history information (123), the product attribute information being supplementary information on products traded among the members;

accepting an input from a user of information to be evaluated, or evaluation information, that has at least a member ID of a trading partner and an item ID;

estimating a supply chain by searching the order information (121) using the member ID of the evaluation information;

narrowing the estimated supply chain information by searching the product attribute information (122) using the member ID and item ID of the evaluation information;

preparing member-based evaluation result information (124) by searching the environment information exchange history information (123) using the member ID and item ID of the screened supply chain information, the member-based evaluation result information representing a result of evaluating response periods taken by individual members to deliver requested information;

performing a tally operation to replace a maximum response period of a downstream member in the supply chain with a maximum response period of an upstream member in the supply chain, by searching the member-based evaluation result information (124) for those records having the same combinations of member ID and item ID; and

outputting from the supply chain total result information to a user terminal through the input/output unit (110) and the network an evaluation value on the response period of the member being evaluated.

7. A supplier evaluation method in electronic commerce according to claim 6,
wherein the product attribute information (122) stored in the storage unit (120) is arranged in the form of databases for one or more kinds of information about products traded among the members, including product constituent procured item information, product manufacturer type number information, product classification information and product use information;
wherein each database for a different kind of product attribute information (122) comprises data records, each having its product attribute information (122) related to a combination of member ID and product item ID;
wherein, in the process where the product attribute information (122) is searched by using the member ID and item ID of the evaluation information to narrow the estimated supply chain information, a step of individually searching a database made up of data records of one kind of product attribute information (122) or a database made up of data records of two or more kinds of product attribute information (122) is performed to narrow the estimated supply chain information.

8. A supplier evaluation method in electronic commerce according to claim 6,
wherein, to the step of performing a tally operation to replace a maximum response period of a downstream member in the supply chain with a maximum response period of an upstream member in the supply chain, by searching the member-based evaluation result information (124) for data records having the same combinations of member ID and item ID, is added a step of adding a takeover flag to a data record of the downstream member who has its maximum response period replaced with that of the upstream member and recording the data record;
wherein, to the process of outputting from the supply chain total result information to a user terminal through the input/output unit (110) an evaluation value on the response period of the member being evaluated, is added a step of searching the supply chain total result information for a data record having the same order receiving member ID and item ID as the order making member ID and item ID, identifying, from the takeover flag of the data record and the takeover flag of the search destination, an upstream member which constitutes a response period bottleneck, and displaying the member being evaluated and a supply chain upstream of the member on the user terminal to clearly show the response periods of individual members and response period bottlenecks.

9. A supplier evaluation method in electronic commerce according to claim 6, further comprising:

a step of adding an exchanged information ID that identifies the kind of environment information to the environment information exchange history information (123) stored in the storage unit (120), and further storing an information exchange definition by industry (125) and an information exchange definition among industries (126) in the storage unit (120) in advance, the information exchange definition by industry defining reference values by industry for input/output quantities of environment information exchanged among the members, the information exchange definition among industries representing a direction in which the environment information is presented among industries;

wherein the step of narrowing the estimated supply chain information by searching the product attribute information (122) using the member ID and item ID of the evaluation information is replaced with a step of:

searching the environment information exchange history (123) using all of the order making member IDs or order receiving member IDs in the estimated supply chain information,

counting the retrieved data for each member ID, for each exchanged information ID and for each input/output, taking an inner product between the input/output quantity of the environment information counted for each member and the reference value by industry in the information exchange definition by industry (125) and assigning the industry having the maximum inner product to each member,

searching the information exchange definition among industries (126) using a combination of order making member ID's industry and order receiving member ID's industry in the estimated supply chain information, and

when a matching data record is found in the information exchange definition among industries (126), writing the associated estimated supply chain information into the screened supply chain information to narrow the supply chain.

10. A supplier evaluation method in electronic commerce, conducted by a plurality of companies via a communication network, to evaluate response periods that suppliers as trading partners take to deliver requested environment information, in order to observe a regulation that makes it mandatory for suppliers to submit within a specified time limit environment information, including at least the name and mass of chemical substances contained in a product, or to meet a deadline specified in a contract with a customer, the supplier evaluation method comprising the steps of:

accepting at any time, via a network from terminals of members engaged in commercial transactions, order information (121) representing a history of orders for products traded among the members and environment information exchange history information (123) representing a history of exchange of the environment information among the members, and then registering these information with a storage unit (120);

storing product attribute information (122) in a storage unit (120) in advance, in addition to the order information (121) and the environment information exchange history information (123), the product attribute information being supplementary information on products traded among the members;

accepting an input from a user of information to be evaluated, or evaluation information, that has at least a member ID of a trading partner and an item ID;

estimating a supply chain by searching the order information (121) using the member ID of the evaluation information;

preparing member-based evaluation result information (124) by searching the environment information exchange history information (123) using the member ID and item ID of the estimated supply chain information, the member-based evaluation result information representing a result of evaluating response periods taken by individual members to deliver requested information;

performing a tally operation to replace a maximum response period of a downstream member in the supply chain with a maximum response period of an upstream member in the supply chain, by searching the member-based evaluation result information (124) for those records having the same combinations of member ID and item ID; and

outputting from the supply chain total result information to a user terminal through the input/output unit (110) and the network an evaluation value on the response period of the member being evaluated.

# FIG. 1

```
┌─────────────┐
│    START    │
└─────────────┘
       │
       ▼
┌─────────────────────────────────────┐
│   ACCEPT INFORMATION TO BE EVALUATED │────S101
│       (MEMBER ID, ITEM ID).          │
└─────────────────────────────────────┘
       │
       ▼
┌─────────────────────────────────────┐
│      ESTIMATE SUPPLY CHAIN (SC)      │
│  FROM ORDER INFORMATION ASSOCIATED   │────S102
│     WITH EVALUATION INFORMATION.     │
└─────────────────────────────────────┘
       │
       ▼
┌─────────────────────────────────────┐
│       NARROW ESTIMATED SC FROM       │
│    PRODUCT ATTRIBUTE INFORMATION     │────S103
│       OF ITEM TO BE EVALUATED.       │
└─────────────────────────────────────┘
       │
       ▼
┌─────────────────────────────────────┐
│       EVALUATE RESPONSE PERIODS      │────S104
│      OF MEMBERS IN SCREENED SC.      │
└─────────────────────────────────────┘
       │
       ▼
┌─────────────────────────────────────┐
│   TOTAL RESPONSE PERIODS OF MEMBERS  │────S105
│          FROM SCREENED SC.           │
└─────────────────────────────────────┘
       │
       ▼
┌─────────────────────────────────────┐
│      DISPLAY EVALUATION RESULT       │
│  OF RESPONSE PERIODS OF EVALUATION   │────S106
│   INFORMATION ACCEPTED AT S101.      │
└─────────────────────────────────────┘
       │
       ▼
┌─────────────┐
│     END     │
└─────────────┘
```

# FIG. 2

[FLOW OF GOODS AND INFORMATION IN SC (SUPPLY CHAIN)]

UPSTREAM ← → DOWNSTREAM

| ... | SECOND SUPPLIER | PRIMARY SUPPLIER | BUYER |

101    100    102    ← → : BUSINESS RELATION

**SUPPLIER EVALUATION SYSTEM IN E-COMMERCE**

110
INPUT/OUTPUT UNIT

130
PROCESSING UNIT    131

120
STORAGE UNIT

121
ORDER INFORMATION

122
PRODUCT ATTRIBUTE INFORMATION

123
ENVIRONMENT INFORMATION EXCHANGE HISTORY

124
EVALUATION RESULT INFORMATION

CALCULATION UNIT
· DATA RETRIEVING UNIT — 132
· SC ESTIMATION UNIT — 133
· SC SCREENING UNIT — 134
· RESPONSE PERIOD EVALUATION UNIT — 135
· RESPONSE PERIOD TALLYING UNIT — 136
· RESULT DISPLAYING UNIT — 137

138

# FIG. 3

START

L (SUPPLY CHAIN (SC) LAYER) = 0 ⟶ S2001

S2002

L=0

Yes → S2003
SEARCH ORDER MAKING MEMBER ID OF ORDER INFORMATION USING MEMBER ID TO BE EVALUATED.

No → S2007
SEARCH ORDER MAKING MEMBER ID OF ORDER INFORMATION USING ORDER RECEIVING MEMBER ID OF LAYER L IN ESTIMATED SC INFORMATION.

S2004
IS MATCHING RECORD FOUND ?

No

Yes

L=L+1 ⟶ S2005

WRITE MATCHING RECORD IN ESTIMATED SC INFORMATION ⟶ S2006

END

# FIG. 4

START

L (SUPPLY CHAIN (SC) LAYER) = 1 — S3001

RETRIEVE [ORDER MAKING MEMBER ID, ORDER MAKING SIDE ITEM ID] (KEY X1) IN ESTIMATED SC INFORMATION HAVING LAYER = L. — S3002

S3003
IS MATCHING ESTIMATED SC INFORMATION FOUND? — No

Yes

SEARCH PRODUCT HANDLING MEMBER ID AND PRODUCT ITEM ID OF PRODUCT ATTRIBUTE INFORMATION (PRODUCT CONSTITUENT PROCURED ITEM) BY USING KEY X1. — S3004

S3005
IS MATCHING PRODUCT ATTRIBUTE INFORMATION FOUND?

Yes — No

S3006
RETRIEVE [PROCURED ITEM HANDLING MEMBER ID, PRODUCT ITEM ID] (KEY X2) OF MATCHING PRODUCT ATTRIBUTE INFORMATION (PRODUCT CONSTITUENT PROCURED ITEM).

S3008
WRITE INTO SCREENED SC INFORMATION THOSE ESTIMATED SC INFORMATION RETRIEVED AT S3002.

S3007
WRITE INTO SCREENED SC INFORMATION THOSE RECORDS OF ESTIMATED SC INFORMATION RETRIEVED AT S3002 THAT MATCH KEY X1 + KEY X2.

S3009
L=L+1

END

21

# FIG. 5

START

$\quad$ L (SUPPLY CHAIN (SC) LAYER) = 1 $\quad$ S3001

RETRIEVE [ORDER MAKING MEMBER ID, ORDER MAKING SIDE ITEM ID] (KEY Y1) AND [ORDER RECEIVING MEMBER ID, ORDER RECEIVING SIDE ITEM ID] (KEY K2) IN ESTIMATED SC INFORMATION HAVING LAYER = L. $\quad$ S3101

S3003 — IS MATCHING ESTIMATED SC INFORMATION FOUND? — No

Yes

SEARCH PRODUCT HANDLING MEMBER ID AND PRODUCT ITEM ID OF PRODUCT ATTRIBUTE INFORMATION (PRODUCT MANUFACTURER TYPE NUMBER) BY USING KEY Y1, Y2 AND RETRIEVE PRODUCT MANUFACTURER TYPE NUMBERS OF MATCHING RECORDS. $\quad$ S3102

S3103 — DO PRODUCT MANUFACTURER TYPE NUMBERS OF KEYS Y1, Y2 AGREE?

Yes — S3104

No — S3105

WRITE INTO SCREENED SC INFORMATION ONLY THOSE RECORDS RETRIEVED AT S3101 WHOSE Y1 AND Y2 KEY PRODUCT MANUFACTURER TYPE NUMBERS AGREE.

WRITE ESTIMATED SC INFORMATION RETRIEVED AT S3101 INTO SCREENED SC INFORMATION.

$\quad$ L=L+1 $\quad$ S3009

END

# FIG. 6

```
                    ┌─────────┐
                    │  START  │
                    └─────────┘
                         │
                         ▼
        ┌──────────────────────────────────────┐
        │  L (SUPPLY CHAIN (SC) LAYER) = 1      │───── S3001
        └──────────────────────────────────────┘
                         │
                         ▼
        ┌──────────────────────────────────────┐
        │  RETRIEVE [ORDER MAKING MEMBER ID,    │───── S3101
        │  ORDER MAKING SIDE ITEM ID] (KEY Y1)  │
        │  AND [ORDER RECEIVING MEMBER ID, ORDER│
        │  RECEIVING SIDE ITEM ID] (KEY K2) IN  │
        │  ESTIMATED SC INFORMATION HAVING      │
        │  LAYER = L.                           │
        └──────────────────────────────────────┘
                         │
                         ▼       S3003
                    ◇───────────────◇
                   ╱  IS MATCHING    ╲       No
                  ╱ ESTIMATED SC INFO  ╲──────────┐
                   ╲   FOUND?          ╱          │
                    ◇───────────────◇            │
                         │ Yes                    │
                         ▼                        │
        ┌──────────────────────────────────────┐ │
        │  SEARCH PRODUCT HANDLING MEMBER ID    │─┼─── S3201
        │  AND PRODUCT ITEM ID OF PRODUCT       │ │
        │  ATTRIBUTE INFORMATION (PRODUCT       │ │
        │  CLASSIFICATION) BY USING KEY Y1, Y2  │ │
        │  AND RETRIEVE PRODUCT CLASSIFICATION  │ │
        │  ID OF MATCHING RECORDS.              │ │
        └──────────────────────────────────────┘ │
                         │         S3202          │
                         ▼                        │
                    ◇───────────────◇            │
          Yes       ╱  DO PRODUCT     ╲    No     │
        ┌──────────╱ CLASSIFICATION IDS ╲─────────┤
        │          ╲ OF KEYS Y1, Y2 AGREE╱        │
        │   S3203   ╲       ?           ╱          │
        ▼            ◇───────────────◇            ▼
┌──────────────────┐                    ┌──────────────────┐
│ WRITE INTO       │                    │ WRITE ESTIMATED  │── S3105
│ SCREENED SC      │                    │ SC INFORMATION   │
│ INFORMATION ONLY │                    │ RETRIEVED AT     │
│ THOSE RECORDS    │                    │ S3101 INTO       │
│ RETRIEVED AT     │                    │ SCREENED SC      │
│ S3101 WHOSE Y1   │                    │ INFORMATION.     │
│ AND Y2 KEY       │                    └──────────────────┘
│ PRODUCT          │                             │
│ CLASSIFICATION   │                             │
│ IDS AGREE.       │                             │
└──────────────────┘                             │
        │                                        │  S3009
        ▼                                        ▼
        ┌──────────────────────────────────────┐
        │              L=L+1                    │
        └──────────────────────────────────────┘
                         │
                         ▼
                    ┌─────────┐
                    │   END   │
                    └─────────┘
```

EP 2 270 733 A1

# FIG. 7

```
                    ┌─────────┐
                    │  START  │
                    └────┬────┘
                         │
          ┌──────────────▼──────────────────┐
          │ L (SUPPLY CHAIN (SC) LAYER) = 1  │──── S3001
          └──────────────┬──────────────────┘
                         │
     ┌───────────────────▼───────────────────┐
     │ RETRIEVE [ORDER MAKING MEMBER ID,      │──── S3101
     │ ORDER MAKING SIDE ITEM ID] (KEY Y1) AND│
     │ [ORDER RECEIVING MEMBER ID, ORDER      │
     │ RECEIVING SIDE ITEM ID] (KEY K2) IN    │
     │ ESTIMATED SC INFORMATION HAVING LAYER = L. │
     └───────────────────┬───────────────────┘
                         │        S3003
                    ◇────▼────◇
                   ╱ IS MATCHING ╲        No
                  ◇ ESTIMATED SC   ◇──────────────┐
                   ╲ INFORMATION  ╱               │
                    ╲  FOUND?   ╱                 │
                     ◇────┬────◇                  │
                       Yes│                       │
     ┌───────────────────▼───────────────────┐   │
     │ SEARCH PRODUCT HANDLING MEMBER ID AND  │── S3301
     │ PRODUCT ITEM ID OF PRODUCT ATTRIBUTE   │   │
     │ INFORMATION (PRODUCT USE) BY USING KEY Y1, Y2 AND │
     │ RETRIEVE PRODUCT USE ID OF MATCHING RECORDS. │
     └───────────────────┬───────────────────┘   │
                         │          S3202         │
                    ◇────▼────◇                   │
             Yes   ╱   DO       ╲    No            │
        ┌─────────◇ PRODUCT USE IDS ◇─────────┐   │
        │          ╲ OF KEYS Y1, Y2 AGREE ╱   │   │
        │   S3303   ╲     ?     ╱          S3105   │
        │            ◇────────◇            │   │
 ┌──────▼──────────────────┐   ┌───────────▼──────────┐
 │ WRITE INTO SCREENED SC   │   │ WRITE ESTIMATED SC   │
 │ INFORMATION ONLY THOSE   │   │ INFORMATION RETRIEVED│
 │ RECORDS RETRIEVED AT S3101│  │ AT S3101 INTO SCREENED│
 │ WHOSE Y1 AND Y2 KEY      │   │ SC INFORMATION.      │
 │ PRODUCT USE IDS AGREE.   │   └───────────┬──────────┘
 └──────┬──────────────────┘               │   S3009
        │                                   │
 ┌──────▼───────────────────────────────────▼──────┐
 │                    L=L+1                          │
 └──────┬───────────────────────────────────────────┘
        │                        │
        └──── (loop back)        ▼
                           ┌─────────┐
                           │   END   │
                           └─────────┘
```

# FIG. 8

START

S4001

SEARCH ENVIRONMENT INFORMATION EXCHANGE HISTORY BY USING [ORDER MAKING MEMBER ID, ORDER RECEIVING MEMBER ID, ORDER RECEIVING SIDE ITEM ID] (KEY Z1) OF SCREENED SUPPLY CHAIN (SC) INFORMATION.

S4002

IS MATCHING ENVIRONMENT INFORMATION EXCHANGE HISTORY FOUND?

Yes

No

S4003

CALCULATE RESPONSE PERIOD T (= INFORMATION DELIVERY DATE – INFORMATION REQUEST DATE) OF MATCHING ENVIRONMENT INFORMATION EXCHANGE HISTORY.

S4005

SEARCH ENVIRONMENT INFORMATION EXCHANGE HISTORY BY USING [ORDER MAKING MEMBER ID, ORDER RECEIVING MEMBER ID] (KEY Z2) OF SCREENED SC INFORMATION.

S4006

CALCULATE RESPONSE PERIOD T (= INFORMATION DELIVERY DATE – INFORMATION REQUEST DATE) OF MATCHING ENVIRONMENT INFORMATION EXCHANGE HISTORY RECORDS.

S4004

WRITE SCREENED SC INFORMATION HAVING KEY Z1, RESPONSE PERIOD = T AND ANSWER FLAG = 1 INTO MEMBER-BASED EVALUATION RESULT INFORMATION.

S4007

CALCULATE MAXIMUM VALUE Tmax OF RESPONSE PERIOD T FOR EVERY KEY Z2.

S4008

WRITE SCREENED SC INFORMATION HAVING KEY Z2, RESPONSE PERIOD = Tmax AND ANSWER FLAG = 0 INTO MEMBER-BASED EVALUATION RESULT INFORMATION.

END

# FIG. 9

START

TRANSCRIBE MEMBER-BASED EVALUATION RESULT INFORMATION INTO SUPPLY CHAIN (SC) TOTAL RESULT INFORMATION. — S5001

L (SC LAYER) = Lmax (MAXIMUM LAYER VALUE IN SC TOTAL RESULT INFORMATION) — S5002

EXTRACT RECORDS WITH SAME [ORDER MAKING MEMBER ID, ORDER MAKING SIDE ITEM ID] (KEY W1) IN SC TOTAL RESULT INFORMATION HAVING LAYER = L. — S5003

DETERMINE MAXIMUM RESPONSE PERIOD Smax FROM THOSE RECORDS EXTRACTED AT S5003 WHICH HAVE ANSWER FLAG = 0 — S5004

WRITE 1 INTO MAXIMUM VALUE FLAG OF RECORD IN SC TOTAL RESULT INFORMATION WHICH HAS MAXIMUM VALUE Smax AND 0 IN OTHERS. — S5005

S5006 — L > 1 No

Yes

SEARCH ORDER RECEIVING MEMBER ID AND ORDER RECEIVING SIDE ITEM ID IN SC TOTAL RESULT INFORMATION, AND COMPARE RESPONSE PERIOD S OF MATCHING RECORD WITH Smax. — S5007

S5008 — Smax > S No

Yes

WRITE Smax IN RESPONSE PERIOD OF MATCHING RECORD. — S5009

L = L - 1 — S5010

WRITE RECORDS OF SC TOTAL RESULT INFORMATION HAVING LAYER=1 AND MAXIMUM FAG=1 INTO EVALUATION RESULT INFORMATION. — S5011

END

# FIG. 10

ORDER INFORMATION

| INCIDENT ID | ORDER MAKING MEMBER ID | ORDER RECEIVING MEMBER ID | ORDER RECEIVING SIDE ITEM ID | QUANTITY ORDERED | DATE OF ORDER |
|---|---|---|---|---|---|
| 1000 | A1 | B1 | b100 | 10 | 08/10/01 |
| 1001 | A1 | B1 | b100 | 20 | 08/10/02 |
| 1002 | A1 | B2 | b200 | 15 | 08/10/02 |
| 1003 | A1 | B3 | b300 | 20 | 08/10/03 |
| 1004 | A1 | B4 | b400 | 25 | 08/10/04 |
| 1005 | B1 | C1 | c100 | 20 | 08/10/05 |
| 1006 | B1 | C2 | c200 | 20 | 08/10/06 |
| 1007 | B2 | C3 | c300 | 30 | 08/10/07 |
| 1008 | B2 | C4 | c400 | 30 | 08/10/08 |
| 1009 | B2 | C5 | c500 | 30 | 08/10/09 |
| 1010 | B2 | C6 | c600 | 30 | 08/10/10 |
| 1011 | B3 | C7 | c700 | 40 | 08/10/11 |
| 1012 | B3 | C8 | c800 | 40 | 08/10/12 |
| 1013 | B3 | C9 | c900 | 40 | 08/10/13 |
| ... | ... | ... | ... | ... | ... |
| 1500 | A2 | B1 | b100 | 10 | 08/11/01 |
| 1501 | A2 | B2 | b200 | 20 | 08/11/02 |
| ... | ... | ... | ... | ... | ... |

# FIG. 11

PRODUCT ATTRIBUTE INFORMATION
(PRODUCT CONSTITUENT PROCURED ITEM)

| PRODUCT HANDLING MEMBER ID | PRODUCT ITEM ID | PROCURED ITEM HANDLING MEMBER ID | PROCURED ITEM ID |
|---|---|---|---|
| A1 | a100 | B1 | b100 |
| A1 | a100 | B2 | b200 |
| A1 | a100 | B3 | b300 |
| ... | ... | ... | ... |

# FIG. 12

PRODUCT ATTRIBUTE INFORMATION
(PRODUCT MANUFACTURER TYPE NUMBER)

| PRODUCT HANDLING MEMBER ID | PRODUCT ITEM ID | PRODUCT MANUFACTURER TYPE NUMBER |
|---|---|---|
| B1 | b100 | c01 |
| C1 | c100 | c01 |
| ... | ... | ... |

# FIG. 13

PRODUCT ATTRIBUTE INFORMATION
(PRODUCT CLASSIFICATION)

| PRODUCT HANDLING MEMBER ID | PRODUCT ITEM ID | PRODUCT CLASSIFICATION ID | PRODUCT CLASSIFICATION NAME |
|---|---|---|---|
| A1 | a100 | p100 | ELECTRONIC PART |
| B1 | b100 | p100 | ELECTRONIC PART |
| B2 | b200 | p100 | ELECTRONIC PART |
| B3 | b300 | p100 | ELECTRONIC PART |
| B4 | b400 | p100 | ELECTRONIC PART |
| C1 | c100 | p100 | ELECTRONIC PART |
| C2 | c200 | p100 | ELECTRONIC PART |
| C3 | c300 | p100 | ELECTRONIC PART |
| C4 | c400 | p100 | ELECTRONIC PART |
| C5 | c500 | p100 | ELECTRONIC PART |
| C6 | c600 | p200 | MACHINE PART |
| C7 | c700 | p100 | ELECTRONIC PART |
| C8 | c800 | p100 | ELECTRONIC PART |
| C9 | c900 | p100 | ELECTRONIC PART |
| . . . | . . . | . . . | . . . |

# FIG. 14

PRODUCT ATTRIBUTE INFORMATION
(PRODUCT USE)

| PRODUCT HANDLING MEMBER ID | PRODUCT ITEM ID | PRODUCT USE ID | PRODUCT USE NAME |
|---|---|---|---|
| A1 | a100 | u100 | ELECTRIC APPLIANCE |
| B1 | b100 | u100 | ELECTRIC APPLIANCE |
| B2 | b200 | u100 | ELECTRIC APPLIANCE |
| B3 | b300 | u100 | ELECTRIC APPLIANCE |
| B4 | b400 | u100 | ELECTRIC APPLIANCE |
| C1 | c100 | u100 | ELECTRIC APPLIANCE |
| C2 | c200 | u100 | ELECTRIC APPLIANCE |
| C3 | c300 | u100 | ELECTRIC APPLIANCE |
| C4 | c400 | u100 | ELECTRIC APPLIANCE |
| C5 | c500 | u100 | ELECTRIC APPLIANCE |
| C6 | c600 | u100 | ELECTRIC APPLIANCE |
| C7 | c700 | u100 | ELECTRIC APPLIANCE |
| C8 | c800 | u100 | ELECTRIC APPLIANCE |
| C9 | c900 | u200 | AUTOMOBILE |
| ... | ... | ... | ... |

# FIG. 15

ENVIRONMENT INFORMATION EXCHANGE HISTORY

| ORDER MAKING MEMBER ID | ORDER RECEIVING MEMBER ID | ORDER RECEIVING SIDE ITEM ID | INFORMATION REQUEST DATE | INFORMATION DELIVERY DATE |
|---|---|---|---|---|
| B1 | C1 | c101 | 08/05/01 | 08/05/15 |
| B1 | C1 | c102 | 08/05/10 | 08/05/20 |
| B2 | C3 | c300 | 08/05/20 | 08/05/30 |
| B2 | C4 | c401 | 08/06/01 | 08/06/05 |
| B2 | C4 | c402 | 08/06/05 | 08/06/10 |
| B2 | C4 | c403 | 08/06/10 | 08/06/16 |
| B2 | C5 | c501 | 08/06/10 | 08/06/22 |
| B3 | C7 | c700 | 08/06/15 | 08/06/22 |
| B3 | C8 | c801 | 08/06/17 | 08/06/25 |
| B3 | C8 | c802 | 08/06/20 | 08/06/30 |
| A1 | B1 | b100 | 08/05/15 | 08/05/30 |
| A1 | B2 | b201 | 08/06/01 | 08/06/11 |
| A1 | B3 | b301 | 08/06/05 | 08/06/15 |
| ... | ... | ... | ... | ... |

# FIG. 16

EVALUATION RESULT INFORMATION

| ORDER MAKING MEMBER ID | ORDER MAKING SIDE ITEM ID | RESPONSE PERIOD |
|---|---|---|
| A1 | a100 | |
| ... | ... | ... |

# FIG. 17

ESTIMATED SUPPLY CHAIN (SC) INFORMATION

| ORDER MAKING MEMBER ID | ORDER MAKING SIDE ITEM ID | ORDER RECEIVING MEMBER ID | ORDER RECEIVING SIDE ITEM ID | LAYER |
|---|---|---|---|---|
| A1 | a100 | B1 | b100 | 1 |
| A1 | a100 | B2 | b200 | 1 |
| A1 | a100 | B3 | b300 | 1 |
| A1 | a100 | B4 | b400 | 1 |
| B1 | b100 | C1 | c100 | 2 |
| B1 | b100 | C2 | c200 | 2 |
| B2 | b200 | C3 | c300 | 2 |
| B2 | b200 | C4 | c400 | 2 |
| B2 | b200 | C5 | c500 | 2 |
| B2 | b200 | C6 | c600 | 2 |
| B3 | b300 | C7 | c700 | 2 |
| B3 | b300 | C8 | c800 | 2 |
| B3 | b300 | C9 | c900 | 2 |
| ... | ... | ... | ... | ... |

# FIG. 18

SCREENED SUPPLY CHAIN (SC) INFORMATION
(RESULT OF SCREENING BY PRODUCT CONSTITUENT PROCURED ITEM INFORMATION)

| ORDER MAKING MEMBER ID | ORDER MAKING SIDE ITEM ID | ORDER RECEIVING MEMBER ID | ORDER RECEIVING SIDE ITEM ID | LAYER |
|---|---|---|---|---|
| A1 | a100 | B1 | b100 | 1 |
| A1 | a100 | B2 | b200 | 1 |
| A1 | a100 | B3 | b300 | 1 |
| B1 | b100 | C1 | c100 | 2 |
| B1 | b100 | C2 | c200 | 2 |
| B2 | b200 | C3 | c300 | 2 |
| B2 | b200 | C4 | c400 | 2 |
| B2 | b200 | C5 | c500 | 2 |
| B2 | b200 | C6 | c600 | 2 |
| B3 | b300 | C7 | c700 | 2 |
| B3 | b300 | C8 | c800 | 2 |
| B3 | b300 | C9 | c900 | 2 |
| . . . | . . . | . . . | . . . | . . . |

# FIG. 19

SCREENED SUPPLY CHAIN (SC) INFORMATION
(RESULT OF SCREENING BY PRODUCT MANUFACTURER TYPE NUMBER)

| ORDER MAKING MEMBER ID | ORDER MAKING SIDE ITEM ID | ORDER RECEIVING MEMBER ID | ORDER RECEIVING SIDE ITEM ID | LAYER |
|---|---|---|---|---|
| A1 | a100 | B1 | b100 | 1 |
| A1 | a100 | B2 | b200 | 1 |
| A1 | a100 | B3 | b300 | 1 |
| A1 | a100 | B4 | b400 | 1 |
| B1 | b100 | C1 | c100 | 2 |
| B2 | b200 | C3 | c300 | 2 |
| B2 | b200 | C4 | c400 | 2 |
| B2 | b200 | C5 | c500 | 2 |
| B2 | b200 | C6 | c600 | 2 |
| B3 | b300 | C7 | c700 | 2 |
| B3 | b300 | C8 | c800 | 2 |
| B3 | b300 | C9 | c900 | 2 |
| ... | ... | ... | ... | ... |

# FIG. 20

SCREENED SUPPLY CHAIN (SC) INFORMATION
(RESULT OF SCREENING BY PRODUCT CLASSIFICATION)

| ORDER MAKING MEMBER ID | ORDER MAKING SIDE ITEM ID | ORDER RECEIVING MEMBER ID | ORDER RECEIVING SIDE ITEM ID | LAYER |
|---|---|---|---|---|
| A1 | a100 | B1 | b100 | 1 |
| A1 | a100 | B2 | b200 | 1 |
| A1 | a100 | B3 | b300 | 1 |
| A1 | a100 | B4 | b400 | 1 |
| B1 | b100 | C1 | c100 | 2 |
| B1 | b100 | C2 | c200 | 2 |
| B2 | b200 | C3 | c300 | 2 |
| B2 | b200 | C4 | c400 | 2 |
| B2 | b200 | C5 | c500 | 2 |
| B3 | b300 | C7 | c700 | 2 |
| B3 | b300 | C8 | c800 | 2 |
| B3 | b300 | C9 | c900 | 2 |
| ... | ... | ... | ... | ... |

# FIG. 21

SCREENED SUPPLY CHAIN (SC) INFORMATION
(RESULT OF SCREENING BY PRODUCT USE)

| ORDER MAKING MEMBER ID | ORDER MAKING SIDE ITEM ID | ORDER RECEIVING MEMBER ID | ORDER RECEIVING SIDE ITEM ID | LAYER |
|---|---|---|---|---|
| A1 | a100 | B1 | b100 | 1 |
| A1 | a100 | B2 | b200 | 1 |
| A1 | a100 | B3 | b300 | 1 |
| A1 | a100 | B4 | b400 | 1 |
| B1 | b100 | C1 | c100 | 2 |
| B1 | b100 | C2 | c200 | 2 |
| B2 | b200 | C3 | c300 | 2 |
| B2 | b200 | C4 | c400 | 2 |
| B2 | b200 | C5 | c500 | 2 |
| B2 | b200 | C6 | c600 | 2 |
| B3 | b300 | C7 | c700 | 2 |
| B3 | b300 | C8 | c800 | 2 |
| . . . | . . . | . . . | . . . | . . . |

# FIG. 22

SCREENED SUPPLY CHAIN (SC) INFORMATION
(RESULT OF SCREENING BY USING ALL PRODUCT ATTRIBUTE INFORMATION)

| ORDER MAKING MEMBER ID | ORDER MAKING SIDE ITEM ID | ORDER RECEIVING MEMBER ID | ORDER RECEIVING SIDE ITEM ID | LAYER |
|---|---|---|---|---|
| A1 | a100 | B1 | b100 | 1 |
| A1 | a100 | B2 | b200 | 1 |
| A1 | a100 | B3 | b300 | 1 |
| B1 | b100 | C1 | c100 | 2 |
| B2 | b200 | C3 | c300 | 2 |
| B2 | b200 | C4 | c400 | 2 |
| B2 | b200 | C5 | c500 | 2 |
| B3 | b300 | C7 | c700 | 2 |
| B3 | b300 | C8 | c800 | 2 |
| ... | ... | ... | ... | ... |

# FIG. 23

MEMBER-BASED EVALUATION RESULT INFORMATION

| ORDER MAKING MEMBER ID | ORDER MAKING SIDE ITEM ID | ORDER RECEIVING MEMBER ID | ORDER RECEIVING SIDE ITEM ID | LAYER | RESPONSE PERIOD | ANSWER FLAG |
|---|---|---|---|---|---|---|
| A1 | a100 | B1 | b100 | 1 | 15 DAYS | 1 |
| A1 | a100 | B2 | b200 | 1 | 10 DAYS | 0 |
| A1 | a100 | B3 | b300 | 1 | 10 DAYS | 0 |
| B1 | b100 | C1 | c100 | 2 | 14 DAYS | 0 |
| B2 | b200 | C3 | c300 | 2 | 10 DAYS | 1 |
| B2 | b200 | C4 | c400 | 2 | 6 DAYS | 0 |
| B2 | b200 | C5 | c500 | 2 | 12 DAYS | 0 |
| B3 | b300 | C7 | c700 | 2 | 7 DAYS | 1 |
| B3 | b300 | C8 | c800 | 2 | 10 DAYS | 0 |
| ... | ... | ... | ... | ... | ... | ... |

# FIG. 24

SUPPLY CHAIN (SC) TOTAL RESULT INFORMATION (BEFORE BEING TOTALED)

| ORDER MAKING MEMBER ID | ORDER MAKING SIDE ITEM ID | ORDER RECEIVING MEMBER ID | ORDER RECEIVING SIDE ITEM ID | LAYER | RESPONSE PERIOD | ANSWER FLAG | MAXIMUM VALUE FLAG |
|---|---|---|---|---|---|---|---|
| A1 | a100 | B1 | b100 | 1 | 15 DAYS | 1 | |
| A1 | a100 | B2 | b200 | 1 | 10 DAYS | 0 | |
| A1 | a100 | B3 | b300 | 1 | 10 DAYS | 0 | |
| B1 | b100 | C1 | c100 | 2 | 14 DAYS | 0 | |
| B2 | b200 | C3 | c300 | 2 | 10 DAYS | 1 | |
| B2 | b200 | C4 | c400 | 2 | 6 DAYS | 0 | |
| B2 | b200 | C5 | c500 | 2 | 12 DAYS | 0 | |
| B3 | b300 | C7 | c700 | 2 | 7 DAYS | 1 | |
| B3 | b300 | C8 | c800 | 2 | 10 DAYS | 0 | |
| ... | ... | ... | ... | ... | ... | ... | ... |

# FIG. 25

SUPPLY CHAIN (SC) TOTAL RESULT INFORMATION (AFTER BEING TOTALED)

| ORDER MAKING MEMBER ID | ORDER MAKING SIDE ITEM ID | ORDER RECEIVING MEMBER ID | ORDER RECEIVING SIDE ITEM ID | LAYER | RESPONSE PERIOD | ANSWER FLAG | MAXIMUM VALUE FLAG |
|---|---|---|---|---|---|---|---|
| A1 | a100 | B1 | b100 | 1 | 15 DAYS | 1 | 0 |
| A1 | a100 | B2 | b200 | 1 | 12 DAYS | 0 | 1 |
| A1 | a100 | B3 | b300 | 1 | 10 DAYS | 0 | 0 |
| B1 | b100 | C1 | c100 | 2 | 14 DAYS | 0 | 1 |
| B2 | b200 | C3 | c300 | 2 | 10 DAYS | 1 | 0 |
| B2 | b200 | C4 | c400 | 2 | 6 DAYS | 0 | 0 |
| B2 | b200 | C5 | c500 | 2 | 12 DAYS | 0 | 1 |
| B3 | b300 | C7 | c700 | 2 | 7 DAYS | 1 | 0 |
| B3 | b300 | C8 | c800 | 2 | 10 DAYS | 0 | 1 |
| ... | ... | ... | ... | ... | ... | ... | ... |

# FIG. 26

INPUT/OUTPUT DISPLAY SCREEN

■ INFORMATION TO BE EVALUATED

MEMBER ID: | A1 |

ITEM ID: | a100 |

START EVALUATION

■ RESULT OF EVALUATION

·ESTIMATED RESPONSE PERIOD: | 12 | DAYS

# FIG. 27

[FLOW OF GOODS AND INFORMATION IN SC (SUPPLY CHAIN)]

UPSTREAM ← — — — — — — — — — — — — — — — — → DOWNSTREAM

PRODUCT

| THIRD SUPPLIER AND FURTHER | | SECOND SUPPLIER | | PRIMARY SUPPLY | | |
|---|---|---|---|---|---|---|

· · · ←···→ C1 —c100→ B1 —b100→ BUYER

· · · ← → C2 ← → (B1) —b101→

· · · ← → C3 ← → B2 —b200→

UNABLE TO DETERMINE MEMBER IN UPSTREAM SC

NEW SUPPLIER    NEW PRODUCT

←——→ : BUSINESS RELATION

# FIG. 28

START

TRANSCRIBE MEMBER-BASED EVALUATION RESULT INFORMATION INTO SUPPLY CHAIN (SC) TOTAL RESULT INFORMATION. ~ S5001

L (SC LAYER) = Lmax
(MAXIMUM LAYER VALUE IN SC TOTAL RESULT INFORMATION) ~ S5002

EXTRACT RECORDS WITH SAME
[ORDER MAKING MEMBER ID, ORDER MAKING SIDE ITEM ID] (KEY W1)
IN SC TOTAL RESULT INFORMATION HAVING LAYER = L. ~ S5003

DETERMINE MAXIMUM RESPONSE PERIOD Smax FROM
THOSE RECORDS EXTRACTED AT S5003 WHICH HAVE ANSWER FLAG = 0 ~ S5004

WRITE 1 INTO MAXIMUM VALUE FLAG OF RECORD IN SC TOTAL RESULT
INFORMATION WHICH HAS MAXIMUM VALUE Smax AND 0 IN OTHERS. ~ S5005

S5012

TAKEOVER FLAG = null? — No

Yes

WRITE TAKEOVER FLAG=0 INTO MATCHING RECORD. ~ S5013

S5006

L > 1 — No

Yes

SEARCH ORDER RECEIVING MEMBER ID AND
ORDER RECEIVING SIDE ITEM ID IN SC TOTAL RESULT INFORMATION,
AND COMPARE RESPONSE PERIOD S OF MATCHING RECORD WITH Smax ~ S5007

S5008

Yes — Smax > S — No

S5014

WRITE RESPONSE PERIOD =
Smax AND TAKEOVER FLAG =
1 INTO MATCHING RECORD.

WRITE TAKEOVER FLAG = 0
INTO MATCHING RECORD. — S5015

L=L-1 ~ S5010

WRITE SC TOTAL RESULT INFORMATION
INTO EVALUATION RESULT INFORMATION. ~ S5016

END

# FIG. 29

SUPPLY CHAIN (SC) TOTAL RESULT INFORMATION
(BEFORE BEING TOTALED)

| ORDER MAKING MEMBER ID | ORDER MAKING SIDE ITEM ID | ORDER RECEIVING MEMBER ID | ORDER RECEIVING SIDE ITEM ID | LAYER | RESPONSE PERIOD | ANSWER FLAG | MAXIMUM VALUE FLAG | TAKEOVER FLAG |
|---|---|---|---|---|---|---|---|---|
| A1 | a100 | B1 | b100 | 1 | 15 DAYS | 1 | | |
| A1 | a100 | B2 | b200 | 1 | 10 DAYS | 0 | | |
| A1 | a100 | B3 | b300 | 1 | 10 DAYS | 0 | | |
| B1 | b100 | C1 | c100 | 2 | 14 DAYS | 0 | | |
| B2 | b200 | C3 | c300 | 2 | 10 DAYS | 1 | | |
| B2 | b200 | C4 | c400 | 2 | 6 DAYS | 0 | | |
| B2 | b200 | C5 | c500 | 2 | 12 DAYS | 0 | | |
| B3 | b300 | C7 | c700 | 2 | 7 DAYS | 1 | | |
| B3 | b300 | C8 | c800 | 2 | 10 DAYS | 0 | | |
| . . . | . . . | . . . | . . . | . . . | . . . | . . . | | |

# FIG. 30

SUPPLY CHAIN (SC) TOTAL RESULT INFORMATION
(AFTER BEING TOTALED)

| ORDER MAKING MEMBER ID | ORDER MAKING SIDE ITEM ID | ORDER RECEIVING MEMBER ID | ORDER RECEIVING SIDE ITEM ID | LAYER | RESPONSE PERIOD | ANSWER FLAG | MAXIMUM VALUE FLAG | TAKEOVER FLAG |
|---|---|---|---|---|---|---|---|---|
| A1 | a100 | B1 | b100 | 1 | 15 DAYS | 1 | 0 | 0 |
| A1 | a100 | B2 | b200 | 1 | 12 DAYS | 0 | 1 | 1 |
| A1 | a100 | B3 | b300 | 1 | 10 DAYS | 0 | 0 | 0 |
| B1 | b100 | C1 | c100 | 2 | 14 DAYS | 0 | 1 | 0 |
| B2 | b200 | C3 | c300 | 2 | 10 DAYS | 1 | 0 | 0 |
| B2 | b200 | C4 | c400 | 2 | 6 DAYS | 0 | 0 | 0 |
| B2 | b200 | C5 | c500 | 2 | 12 DAYS | 0 | 1 | 0 |
| B3 | b300 | C7 | c700 | 2 | 7 DAYS | 1 | 0 | 0 |
| B3 | b300 | C8 | c800 | 2 | 10 DAYS | 0 | 1 | 0 |
| ... | ... | ... | ... | ... | ... | ... | ... | ... |

# FIG. 31

INPUT/OUTPUT DISPLAY SCREEN

■ INFORMATION TO BE EVALUATED

MEMBER ID: | A1

ITEM ID: | a100

START
EVALUATION

■ RESULT OF EVALUATION

· ESTIMATED RESPONSE PERIOD: | 12 | DAYS

· RESPONSE PERIODS IN UPSTREAM SUPPLY CHAIN

SUPPLY CHAIN

UPSTREAM        DOWNSTREAM

C1 —— B1 DELIVERED —— A1   12 DAYS

C3 DELIVERED —— B2 12 DAYS

C4 6 DAYS

C6 12 DAYS

C7 DELIVERED —— B3 10 DAYS

C8 10 DAYS

# FIG. 32

START

RETRIEVE EVALUATION RESULT INFORMATION — S6001

S6002

Yes ← ANSWER FLAG = 1? → No

S6003

DISPLAY EVALUATION RESULT = "DELIVERED".

S6004

DISPLAY EVALUATION RESULT = RESPONSE PERIOD.

S6005

MAXIMUM VALUE FLAG = 1? — No

Yes

SEARCH FOR DATA RECORD HAVING SAME [ORDER RECEIVING MEMBER ID, ORDER RECEIVING SIDE ITEM ID] AS [ORDER MAKING MEMBER ID, ORDER MAKING SIDE ITEM ID] OF MATCHING RECORD. — S6006

S6007

TAKEOVER FLAG OF RECORD = 0? AND TAKEOVER FLAG OF SEARCH DESTINATION = 1? — No

Yes

DISPLAY MATCHING RECORD AS BOTTLENECK. — S6008

END

# FIG. 33

```
                    ┌─────────┐
                    │  START  │
                    └─────────┘
                         │
                         ▼
    ┌──────────────────────────────────────┐
    │   ACCEPT INFORMATION TO BE EVALUATED  │──── S101
    │        (MEMBER ID, ITEM ID).          │
    └──────────────────────────────────────┘
                         │
                         ▼
    ┌──────────────────────────────────────┐
    │       ESTIMATE SUPPLY CHAIN (SC)      │──── S102
    │   FROM ORDER INFORMATION ASSOCIATED   │
    │       WITH EVALUATION INFORMATION.    │
    └──────────────────────────────────────┘
                         │
                         ▼
    ┌──────────────────────────────────────┐
    │       NARROW ESTIMATED SC BY KIND     │──── S107
    │          AND QUANTITY OF ENVIRONMENT  │
    │   INFORMATION EXCHANGED AMONG COMPANIES.│
    └──────────────────────────────────────┘
                         │
                         ▼
    ┌──────────────────────────────────────┐
    │        EVALUATE RESPONSE PERIODS      │──── S104
    │         OF MEMBERS IN SCREENED SC.    │
    └──────────────────────────────────────┘
                         │
                         ▼
    ┌──────────────────────────────────────┐
    │   TOTAL RESPONSE PERIODS OF MEMBERS   │──── S105
    │           FROM SCREENED SC.           │
    └──────────────────────────────────────┘
                         │
                         ▼
    ┌──────────────────────────────────────┐
    │       DISPLAY EVALUATION RESULT       │──── S106
    │   OF RESPONSE PERIODS OF EVALUATION   │
    │    INFORMATION ACCEPTED AT S101.      │
    └──────────────────────────────────────┘
                         │
                         ▼
                    ┌─────────┐
                    │   END   │
                    └─────────┘
```

# FIG. 34

[FLOW OF GOODS AND INFORMATION IN SC
(SUPPLY CHAIN)]

UPSTREAM ◄ - - - - - - - - - - - - - - - - - - - - - - - ► DOWNSTREAM

| · · · | SECOND SUPPLIER | PRIMARY SUPPLIER | BUYER |

101
100
102

◄—► : BUSINESS RELATION

SUPPLIER EVALUATION SYSTEM
IN E-COMMERCE

110
INPUT/OUTPUT UNIT

130
PROCESSING UNIT
131
CALCULATION UNIT

120
STORAGE UNIT
121
ORDER INFORMATION

123
ENVIRONMENT INFORMATION EXCHANGE HISTORY

124
EVALUATION RESULT INFORMATION

125
INFORMATION EXCHANGE DEFINITION BY INDUSTRY

126
INFORMATION EXCHANGE DEFINITION AMONG INDUSTRIES

· DATA RETRIEVING UNIT ——132
· SC ESTIMATION UNIT ——133
· SC SCREENING UNIT ——134
· RESPONSE PERIOD EVALUATION UNIT ——135
· RESPONSE PERIOD TALLYING UNIT ——136
· RESULT DISPLAYING UNIT ——137

138

# FIG. 35

START

RETRIEVE INFORMATION EXCHANGE DEFINITION BY INDUSTRY AND INFORMATION EXCHANGE DEFINITION AMONG INDUSTRIES. — S7001

SEARCH ENVIRONMENT INFORMATION EXCHANGE HISTORY USING ALL OF ORDER MAKING MEMBER IDS OR ORDER RECEIVING MEMBER IDS IN ESTIMATED SUPPLY CHAIN (SC) INFORMATION. — S7002

COUNT DATA RECORDS RETRIEVED AT S7002 FOR EACH MEMBER ID, FOR EACH EXCHANGED INFORMATION ID AND FOR EACH INPUT/OUTPUT. — S7003

TAKE INNER PRODUCT BETWEEN I/O QUANTITY OF ENVIRONMENT INFORMATION COUNTED FOR EACH MEMBER AND REFERENCE VALUE IN INFORMATION EXCHANGE DEFINITION BY INDUSTRY; ALLOCATE INDUSTRY WHOSE INNER PRODUCT IS MAXIMUM TO ALL MEMBERS. — S7004

SEARCH INFORMATION EXCHANGE DEFINITION AMONG INDUSTRIES BY USING INDUSTRY-INDUSTRY COMBINATION OF [ORDER MAKING MEMBER ID, ORDER RECEIVING MEMBER ID] IN ESTIMATED SC INFORMATION. — S7005

S7006

IS MATCHING RECORD FOUND IN INFORMATION EXCHANGE DEFINITION AMONG INDUSTRIES? — No

Yes

WRITE MATCHING RECORD OF ESTIMATED SC INFORMATION INTO SCREENED SC INFORMATION. — S7007

END

51

# FIG. 36

ENVIRONMENT INFORMATION EXCHANGE HISTORY

| ORDER MAKING MEMBER ID | ORDER RECEIVING MEMBER ID | ORDER RECEIVING SIDE ITEM ID | EXCHANGED INFORMATION ID | INFORMATION REQUEST DATE | INFORMATION DELIVERY DATE |
|---|---|---|---|---|---|
| B1 | C1 | c101 | I01 | 08/05/01 | 08/05/15 |
| B1 | C1 | c102 | I01 | 08/05/10 | 08/05/20 |
| B1 | C2 | c201 | I02 | 08/05/20 | 08/05/30 |
| A1 | B1 | b100 | I01 | 08/05/15 | 08/05/30 |
| A2 | B1 | b101 | I01 | 08/06/01 | 08/06/11 |
| A1 | B3 | b301 | I02 | 08/06/05 | 08/06/15 |
| ... | ... | ... | ... | ... | ... |

# FIG. 37

INFORMATION EXCHANGE DEFINITION BY INDUSTRY

| INDUSTRY ID | EXCHANGED INFORMATION ID | I/O CATEGORY | NO. OF INCIDENTS |
|---|---|---|---|
| G01 | I01 | In | 10 |
| G01 | I02 | In | 0 |
| G01 | I01 | Out | 90 |
| G01 | I02 | Out | 0 |
| G02 | I01 | In | 50 |
| G02 | I02 | In | 0 |
| G02 | I01 | Out | 50 |
| G02 | I02 | Out | 0 |
| G03 | I01 | In | 40 |
| G03 | I02 | In | 10 |
| G03 | I01 | Out | 0 |
| G03 | I02 | Out | 50 |
| G04 | I01 | In | 10 |
| G04 | I02 | In | 70 |
| G04 | I01 | Out | 0 |
| G04 | I02 | Out | 20 |
| ... | ... | ... | ... |

# FIG. 38

INFORMATION EXCHANGE
DEFINITION AMONG INDUSTRIES

| ORDER MAKING SIDE INDUSTRY ID | ORDER RECEIVING SIDE INDUSTRY ID |
|---|---|
| G02 | G01 |
| G03 | G02 |
| G04 | G02 |
| G04 | G03 |
| . . . | . . . |

# FIG. 39

ENVIRONMENT INFORMATION INPUT/OUTPUT QUANTITY
FOR EACH MEMBER

| MEMBER ID | EXCHANGED INFORMATION ID | I/O CATEGORY | NO. OF INCIDENTS |
|---|---|---|---|
| B1 | I01 | In | 40 |
| B1 | I02 | In | 2 |
| B1 | I01 | Out | 30 |
| B1 | I02 | Out | 0 |
| A1 | I01 | In | 10 |
| A1 | I02 | In | 60 |
| A1 | I01 | Out | 0 |
| A1 | I02 | Out | 15 |
| C1 | I01 | In | 20 |
| C1 | I02 | In | 5 |
| C1 | I01 | Out | 80 |
| C1 | I02 | Out | 0 |
| C2 | I01 | In | 60 |
| C2 | I02 | In | 15 |
| C2 | I01 | Out | 0 |
| C2 | I02 | Out | 70 |
| ... | ... | ... | ... |

# FIG. 40

INDUSTRY ALLOTMENT RESULT
FOR EACH MEMBER

| MEMBER ID | INDUSTRY ID |
|-----------|-------------|
| B1 | G02 |
| A1 | G04 |
| C1 | G01 |
| C2 | G03 |
| . . . | . . . |

# EP 2 270 733 A1

Europäisches
Patentamt

European
Patent Office

Office européen
des brevets

## EUROPEAN SEARCH REPORT

Application Number

EP 10 16 1083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | The only identifiable technical aspects of the claimed invention relate to the use of conventional, general-purpose data processing technology for processing data of an inherently non-technical nature. The notoriety of such prior art cannot reasonably be contested. cf. Official Journal 11/2007, 592. XP002456252 | 1-10 | INV. G06Q30/00 |
| L | * the whole document * ----- | | |

TECHNICAL FIELDS SEARCHED (IPC)

G06Q

The present search report has been drawn up for all claims

| Place of search | Date of completion of the search | Examiner |
|---|---|---|
| Munich | 19 July 2010 | Hopper, Eva |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

57

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000148785 A

- JP 2003303252 A